# EUROPEAN PATENT APPLICATION

(11) **EP 1 083 530 A2**
(43) Date of publication of application: **14.03.2001**
(21) Application number: 00303968.2
(22) Date of filing: 11.05.2000
(51) Int. Cl.: G07F 17/30, G07F 19/00

(54) **Contents sale system**

(30) Priority: 31.05.1999 JP 15220999
(71) Applicant: Victor Company of Japan, Ltd., Yokohama 221-0022 (JP)
(72) Inventor: Tanaka, Yoshiaki, Fujisawa-shi, Kanagawa-ken (JP); Satoh, Yasuo, Sagamihara-shi, Kanagawa-ken (JP); Umekai, Katsuhiro, Yokohama-shi, Kanagawa-ken (JP); Okabe, Yasuhisa, Isehara-shi, Kanagawa-ken (JP)
(74) Representative: Senior, Alan Murray

(57) **Abstract**

A sale destination terminal apparatus is designed for a contents sale system including a host apparatus for feeding contents data. In the terminal apparatus, a first device operates for storing a signal representing an electronic purse having electronic money. A second device operates for, in cases where contents data are copied and transferred from the terminal apparatus to a copy destination apparatus, storing a signal representing a transfer generation number corresponding to a number of times of transfer of the contents data. A third device operates for, in cases where copied contents data are transferred to the terminal apparatus from a copy source apparatus, storing a signal representing a history of transfer of at least one of a copy source ID and sale contents. A fourth device operates for, in cases where the copied contents data are transferred to the terminal apparatus, receiving the copied contents data. A fifth device operates for reducing the electronic money in the electronic purse by an amount corresponding to the received contents data. A sixth device operates for, when the terminal apparatus is connected with the host apparatus, transmitting the signal representing the transfer history to the host apparatus in response to a requirement signal fed from the host apparatus. A seventh device operates for deleting the stored signal of the transfer history in response to a control signal fed from the host apparatus.

## Description

This invention relates to a contents sale system in which contents data such as data representing a tune or an audio visual program are transmitted from a selling agency to a customer when the contents data are bought by the customer. This invention also relates to a method in business or a business model for a contents sale system.

In a typical contents sale system, customer's players can be connected to a computer-based host apparatus in a selling agency via a communication network such as the Internet. Contents data, for example, data representing a tune or an audio visual program, are transmitted and downloaded from the host apparatus to a storage unit in a customer's player when the contents data are bought by a customer.

A first conceivable contents sale system includes terminal apparatuses provided in stores respectively. The terminal apparatus in each store can be connected to a host apparatus in a selling agency via a communication network. A customer's player can be directly connected to the terminal apparatus. Contents data can be transmitted and downloaded from the host apparatus in the selling agency to the customer's player via the terminal apparatus in the store. Examples of the store are a kiosk, a convenience store, and a gasoline service station.

A second conceivable contents sale system includes a server and clients connected via the Internet. Clients are customer's personal computers respectively. Customer's players can be connected to the customer's personal computers. Contents data can be transmitted and downloaded from a selling agency to a customer's player via the server, the Internet, and a customer's personal computer.

It is desirable to prevent contents data from being transmitted and downloaded to an illegal customer's player. Even in the case where contents data have been transmitted and downloaded to a legitimate customer's player, it is desirable to manage copying the contents data for copyright protection.

It is a first aim of this invention to provide a method and an apparatus in a contents sale system which can manage copying contents data after the contents data are bought by a customer.

It is a second aim of this invention to provide an improved business model for a contents sale system.

A first aspect of this invention provides a sale destination terminal apparatus for a contents sale system including a host apparatus for feeding contents data. The terminal apparatus comprises means for storing a signal representing an electronic purse having electronic money; means for, in cases where contents data are copied and transferred from the present terminal apparatus to a copy destination apparatus, storing a signal representing a transfer generation number corresponding to a number of times of transfer of the contents data; means for, in cases where copied contents data are transferred to the present terminal apparatus from a copy source apparatus, storing a signal representing a history of transfer of at least one of a copy source ID and sale contents; means for, in cases where the copied contents data are transferred to the present terminal apparatus, receiving the copied contents data; means for reducing the electronic money in the electronic purse by an amount corresponding to the received contents data; means for, when the present terminal apparatus is connected with the host apparatus, transmitting the signal representing the transfer history to the host apparatus in response to a requirement signal fed from the host apparatus; and means for deleting the stored signal of the transfer history in response to a control signal fed from the host apparatus.

A second aspect of this invention provides a sale destination terminal apparatus for a contents sale system including a host apparatus for feeding contents data. The terminal apparatus comprises means for storing a signal representing an electronic purse having electronic money; means for, in cases where copied contents data are transferred to the present terminal apparatus from a copy source apparatus, storing a signal representing a history of transfer of the contents data; means for transmitting the signal of the transfer history to the copy source apparatus and thereafter receiving the copied contents data; means for reducing the electronic money in the electronic purse by an amount corresponding to the received contents data; means for, when the present terminal apparatus is connected with the host apparatus, transmitting the signal representing the transfer history to the host apparatus in response to a requirement signal fed from the host apparatus; and means for deleting the stored signal of the transfer history in response to a control signal fed from the host apparatus.

A third aspect of this invention is based on the first aspect thereof, and provides a sale destination terminal apparatus further comprising means for transmitting information of the transfer history to a settlement box, means for receiving a control signal from the settlement box as a response to the information of the transfer history, and means for deleting the stored signal of the transfer history in response to the control signal from the settlement box.

A fourth aspect of this invention provides a sale destination terminal apparatus for a contents sale system including a host apparatus for feeding contents data. The terminal apparatus comprises means for, in cases where contents data are copied and transferred from the present terminal apparatus to a copy destination apparatus and in cases where contents data are copied and transferred to the present terminal apparatus from a copy source apparatus, storing a signal representing a transfer history; means for transmitting the signal of the transfer history to the host apparatus; means for receiving a control signal from the host apparatus after the signal of the transfer history is transmitted to the host apparatus; and means for deleting the stored signal of the transfer history in response to the control signal from the host apparatus.

A fifth aspect of this invention is based on the fourth aspect thereof, and provides a sale destination terminal apparatus further comprising means for transmitting information of the transfer history to a settlement box, means for receiving a control signal from the settlement box as a response to the information of the transfer history, and means for deleting the stored signal of the transfer history in response to the control signal from the settlement box.

A sixth aspect of this invention is based on the fourth aspect thereof, and provides a sale destination terminal apparatus further comprising means for storing a signal of a transfer generation number corresponding to a number of times of copying the contents data in a transferred signal header each time the contents data are copied and transferred, means for receiving first contents information from the copy destination terminal, means for storing second contents information, and means for deciding whether copying is permitted or prohibited on the basis of the first contents information and the second contents information.

A seventh aspect of this invention provides a host apparatus for a contents sale system including a sale destination terminal apparatus for receiving contents data. The host apparatus comprises means for receiving a signal of a transfer history from the sale destination terminal apparatus; and means for, after the signal of the transfer history is received, transmitting a control signal to the sale destination terminal, the control signal being designed to delete the signal of the transfer history from the sale destination terminal apparatus.

An eighth aspect of this invention provides a settlement box for a contents sale system including a sale destination terminal apparatus for receiving contents data. The settlement box comprises means for receiving a signal of a transfer history from the sale destination terminal apparatus; and means for, after the signal of the transfer history is received, transmitting a control signal to the sale destination terminal, the control signal being designed to delete the signal of the transfer history from the sale destination terminal apparatus.

A ninth aspect of this invention provides a sale destination terminal apparatus for a contents sale system including a host apparatus for feeding contents data. The terminal apparatus comprises means for storing contents data fed from the host apparatus; means for transmitting editing information to the host apparatus in response to a requirement signal fed from the host apparatus, the editing information representing at least one of a playback order, a data length, a title name, and an artist name related to the contents data; means for receiving editing-resultant information from the host apparatus as a response to the editing information; and means for editing the stored contents data in response to the editing-resultant information.

A tenth aspect of this invention provides a host apparatus for a contents sale system including a sale destination terminal apparatus for receiving contents data. The host apparatus comprises means for receiving editing information from the sale destination terminal apparatus; means for executing an editing process on the basis of the editing information to generate editing-resultant information; and means for transmitting the editing-resultant information to the sale destination terminal apparatus.

An eleventh aspect of this invention provides a method of managing copying in a contents sale system. The method comprises the steps of generating first encryption-resultant authentication data in response to first predetermined common key data in a copy destination apparatus; transmitting the first encryption-resultant authentication data from the copy destination apparatus to a copy source apparatus; decrypting the first encryption-resultant authentication data into first decryption-resultant authentication data in response to the first predetermined common key in the copy source apparatus; authenticating the copy destination apparatus in response to the first decryption-resultant authentication data in the copy source apparatus; generating second encryption-resultant authentication data in response to second predetermined common key data in the copy source apparatus; transmitting the second encryption-resultant authentication data from the copy source apparatus to the copy destination apparatus; decrypting the second encryption-resultant authentication data into second decryption-resultant authentication data in response to the second predetermined common key in the copy destination apparatus; authenticating the copy source apparatus in response to the second decryption-resultant authentication data in the copy destination apparatus; and deciding whether copying is permitted or prohibited after the copy destination apparatus and the copy source apparatus are authenticated.

A twelfth aspect of this invention provides a method of managing copying in a contents sale system. The method comprises the steps of generating first authentication data in a copy destination apparatus; transmitting the first authentication data from the copy destination apparatus to a copy source apparatus; authenticating the copy destination apparatus in response to the first authentication data in the copy source apparatus; generating second authentication data in the copy source apparatus; transmitting the second authentication data from the copy source apparatus to the copy destination apparatus; authenticating the copy source apparatus in response to the second authentication data in the copy destination apparatus; and deciding whether copying is permitted or prohibited after the copy destination apparatus and the copy source apparatus are authenticated.

A thirteenth aspect of this invention provides a method of managing copying in a contents sale system. The method comprises the steps of generating first forward authentication data in a copy source apparatus; transmitting the first forward authentication data from the copy source apparatus to a copy destination apparatus; generating first reply authentication data in response to the first forward authentication data in the copy destination apparatus; transmitting the first reply authentication data from the copy destination apparatus to the copy source apparatus; authenticating the copy destination apparatus in response to the first reply authentication data in the copy source apparatus; generating second forward authentication data in the copy destination apparatus; transmitting the second forward authentication data from the copy destination apparatus to the copy source apparatus; generating second reply authentication data in response to the second forward authentication data in the copy source apparatus; transmitting the second reply authentication data from the copy source apparatus to the copy destination apparatus; authenticating the copy source apparatus in response to the second reply authentication data in the copy destination apparatus; and deciding whether copying is permitted or prohibited after the copy destination apparatus and the copy source apparatus are authenticated.

A fourteenth aspect of this invention is based on the thirteenth aspect thereof, and provides a method wherein the copy source apparatus comprises one of a terminal apparatus in a store, a settlement box, a server for an Internet service, a personal computer for a user, and a player.

A fifteenth aspect of this invention provides a player executing at least portions of the steps in one of the methods in the eleventh to thirteenth aspects of this invention.

A sixteenth aspect of this invention provides a method of transmitting data. The method comprises the steps of encrypting first data into first encryption-resultant data in response to first predetermined playback key data; encrypting second data into second encryption-resultant data in response to second predetermined playback key data; and transmitting the first encryption-resultant data and the second encryption-resultant data; wherein the second predetermined playback key data providing a decoding rate different from a decoding rate provided by the first predetermined playback key data.

A seventeenth aspect of this invention provides a method of transmitting data. The method comprises the steps of executing Exclusive-OR operation between actual contents data and first playback key data to encrypt the actual contents data into first encryption-resultant data; encrypting header data into second encryption-resultant data in response to second playback key data according to DES; and transmitting a set of the first encryption-resultant data and the second encryption-resultant data.

An eighteenth aspect of this invention provides a recording medium having a predetermined area loaded with data transmitted by one of the methods in the sixteenth or seventeenth aspect of this invention.

A nineteenth aspect of this invention provides a method comprising the steps of transmitting forward player authentication data from a store terminal apparatus to a player; generating reply player authentication data in response to the forward player authentication data in the player; transmitting the reply player authentication data and forward host authentication data from the player to the store terminal apparatus; authenticating the player in response to the reply player authentication data in the store terminal apparatus; generating reply host authentication data in response to the forward host authentication data in the store terminal apparatus; transmitting the reply host authentication data from the store terminal apparatus to the player; authenticating the store terminal apparatus in response to the replay host authentication data in the player; and permitting a sale action after the player and the store terminal apparatus are authenticated.

A twentieth aspect of this invention provides a method comprising the steps of transmitting forward player authentication data from a PC client to a player; generating reply player authentication data in response to the forward player authentication data in the player; transmitting the reply player authentication data and forward host authentication data from the player to the PC client; authenticating the player in response to the reply player authentication data in the PC client; generating reply host authentication data in response to the forward host authentication data in the PC client; transmitting the reply host authentication data from the PC client to the player; authenticating the PC client in response to the replay host authentication data in the player; and permitting a sale action after the player and the PC client are authenticated.

A twenty-first aspect of this invention provides a method comprising the steps of transmitting a signal of a transfer history transmission request from a store terminal apparatus to a player; transmitting a signal of a transfer history from the player to the store terminal apparatus in response to the signal of the transfer history transmission request; transmitting a signal of a transfer history deletion request from the store terminal apparatus to the player; transmitting a signal of a transfer history deletion notice from the player to the store terminal apparatus in response to the signal of the transfer history deletion request; and permitting a sale action after the signal of the transfer history deletion notice is transmitted.

A twenty-second aspect of this invention provides a method comprising the steps of transmitting a signal of a transfer history transmission request from a web server to a player via a PC client; transmitting a signal of a transfer history from the player to the web server via the PC client in response to the signal of the transfer history transmission request; transmitting a signal of a transfer history deletion request from the web server to the player via the PC client; transmitting a signal of a transfer history deletion notice from the player to the web server via the PC client in response to the signal of the transfer history deletion request; and permitting a sale action after the signal of the transfer history deletion notice is transmitted.

A twenty-third aspect of this invention provides a method comprising the steps of generating original playback key data; encrypting original contents data into encryption-resultant contents data in response to the original playback key data; encrypting the original playback key data into first encryption-resultant playback key data; transmitting the encryption-resultant contents data and the first encryption-resultant playback key data from an authoring system unit to a sale source terminal apparatus; causing the sale source terminal apparatus to encrypt the first encryption-resultant playback key data into second encryption-resultant playback key data in response to data peculiar to a sale destination terminal apparatus; and permitting a sale action using the second encryption-resultant playback key data.

A twenty-fourth aspect of this invention provides a method comprising the steps of generating original playback key data; encrypting original contents data into encryption-resultant contents data in response to the original playback key data; encrypting the original playback key data into first encryption-resultant playback key data; transmitting the encryption-resultant contents data and the first encryption-resultant playback key data from an authoring system unit to a sale source terminal apparatus; causing the sale source terminal apparatus to encrypt the first encryption-resultant playback key data into second encryption-resultant playback key data in response to data peculiar to a sale destination terminal apparatus; and permitting a sale action using the second encryption-resultant playback key data; wherein the sale source terminal apparatus comprises a web server, and the sale destination terminal apparatus comprises a player connected with the web server via a PC client.

A twenty-fifth aspect of this invention provides a method using a sale destination terminal apparatus, the sale destination terminal apparatus including a mobile telephone terminal device, the method comprising the step of receiving data from the sale source terminal apparatus of the eighth aspect via a mobile telephone contents-information transmission service.

A twenty-sixth aspect of this invention provides a system comprising a sale destination terminal apparatus, the sale destination terminal apparatus including a mobile telephone terminal device which receives data from the sale source terminal apparatus of the eighth aspect via mobile telephone contents-information transmission service.

The present invention will be described further below with reference to exemplary embodiments and the accompanying drawings, in which:

Fig. 1 is a block diagram of a kiosk-related portion of a contents sale system according to a first embodiment of this invention.

Fig. 2 is a block diagram of an Internet-related portion of the contents sale system according to the first embodiment of this invention.

Fig. 3 is a diagram of a structure of a sale header.

Fig. 4 is a diagram of a structure of a sale header provided and added by an authoring system unit during a mastering process.

Fig. 5 is a diagram of a structure of a sale sub header.

Fig. 6 is a diagram of a structure of transfer control data.

Fig. 7 is a flowchart of a segment of a control program for a computer in an authoring system unit in Figs. 1 and 2.

Fig. 8 is a flowchart of a segment of a control program for a computer in a kiosk terminal apparatus in Fig. 1.

Fig. 9 is a flowchart of a segment of a control program for a computer in a customer's player in Figs. 1 and 2.

Fig. 10 is a block diagram of the customer's player in Figs. 1 and 2.

Figs. 11, 12, and 13 are diagrams showing a sequence of communications between the kiosk terminal apparatus and the customer's player in Fig. 1.

Figs. 14, 15, 16, 17, 18, and 19 are diagrams showing a sequence of communications among a web server, a PC client, and the customer's player in Fig. 2.

Fig. 20 is a flowchart of a segment of a control program for the PC client in Fig. 2.

Fig. 21 is a diagram showing a sequence of communications between the customer's players in Figs. 1 and 2.

Fig. 22 is a flowchart of a second segment of the control program for the computer in the customer's player in Figs. 1 and 2.

Fig. 23 is a diagram of a first basic format of transmitted signals.

Fig. 24 is a diagram of a second basic format of transmitted signals.

Fig. 25 is a diagram of a list of code words assigned to transmission sources.

Figs. 26 and 27 are diagrams of lists of code words assigned to commands or transmitted-signal types.

Fig. 28 is a diagram of a format of text data.

Figs. 29, 30, and 31 are diagrams showing a sequence of communications among a web server 9, a PC client 10, and a customer's player 6a according to a second embodiment of this invention.

Figs. 32 and 33 are diagrams showing a sequence of communications between customer's players 6a and 6b according to a third embodiment of this invention.

Fig. 34 is a block diagram of a kiosk-related portion of a contents sale system according to a sixth embodiment of this invention.

Fig. 35 is a diagram showing a part of a sequence of communications between a kiosk terminal apparatus and a customer's player in the sixth embodiment of this invention.

Fig. 36 is a block diagram of a contents sale system according to a seventh embodiment of this invention.

### First Embodiment

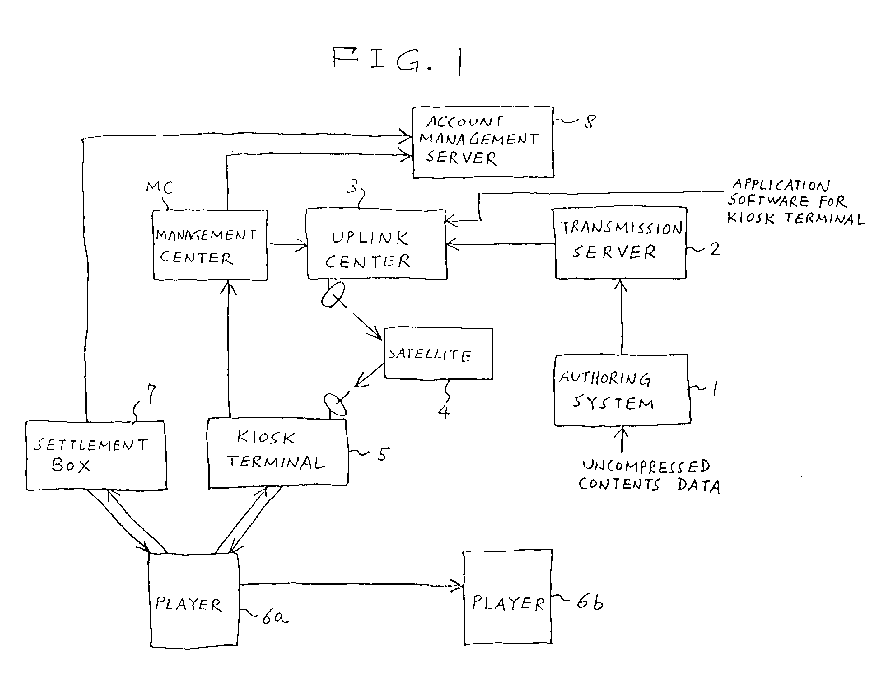

Fig. 1 shows a kiosk-related portion of a contents sale system according to a first embodiment of this invention. With reference to Fig. 1, the kiosk-related portion of the contents sale system includes a terminal apparatus 5 located in a store (for example, a kiosk, a convenience store, or a gasoline service station). The terminal apparatus 5 is also referred to as the kiosk terminal apparatus 5. The terminal apparatus 5 includes a computer, communication devices, and an interface for connection with a customer's player. First one of the communication devices is designed for communications with a satellite 4. Second one of the communication devices is designed for wire-telephone communications with a management center MC. The computer in the terminal apparatus 5 operates in accordance with a control program stored in a memory. The control program is designed to enable the terminal apparatus 5 to implement processes mentioned later. The computer in the terminal apparatus 5 forms a kiosk server.

A host side (a selling agency) of the contents sale system includes a computer-based authoring system unit 1 connected to at least one of an audio CD drive, an audio DVD drive, and a storage unit having a database of tunes. A computer in the authoring system unit 1 operates in accordance with a control program stored in a memory. The control program is designed to enable the authoring system unit 1 to implement processes mentioned later. The authoring system unit 1 receives uncompressed music contents data, that is, uncompressed data representative of at least one tune, from the audio CD drive, the audio DVD drive, or the storage unit. The authoring system unit 1 compresses the received contents data by given signal processing such as "Twin VQ". The authoring system unit 1 encrypts or scrambles the compression-resultant contents data in response to playback key data. In addition, the authoring system unit 1 encrypts the playback key data into primary encryption-resultant playback key data (first encryption-resultant playback key data). The authoring system unit 1 combines the encryption-resultant contents data and the primary encryption-resultant playback key data into composite data of a given format (a given structure). The authoring system unit 1 may record the composite data.

The authoring system unit 1 feeds the composite data to a transmission server 2. The transmission server 2 feeds the composite data to an uplink center 3 which can communicate with the satellite 4. The uplink center 3 transmits the composite data to the terminal apparatus 5 via the satellite 4. The kiosk server in the terminal apparatus 5 receives the composite data. The uplink center 3 is connected to the management center MC.

A customer's player 6a can be connected to the terminal apparatus 5 via an IEEE1394 interface. The player 6a includes a computer which operates in accordance with a control program stored in a memory. The control program is designed to enable the player 6a to implement processes mentioned later. The player 6a also includes a storage unit. A predetermined ID (a predetermined identification code word) is assigned to the player 6a. In the case where the player 6a is connected with the terminal apparatus 5, the player 6a informs the terminal apparatus 5 of its own ID before downloading. The terminal apparatus 5 separates the composite data into the primary encryption-resultant playback key data and the encryption-resultant contents data. The terminal apparatus 5 encrypts the primary encryption-resultant playback key data into secondary encryption-resultant playback key data (second encryption-resultant playback key data). In the case where the terminal apparatus 5 is connected with the player 6a, the terminal apparatus 5 downloads the encryption-resultant contents data and the secondary encryption-resultant playback key data into the storage unit of the player 6a. The player 6a recovers original contents data by decrypting the encryption-resultant contents data. In addition, the player 6a generates other secondary encryption-resultant playback key data (third encryption-resultant playback key data) which will be used for data transfer or data copying to another player.

A customer's player 6b can be connected to the customer's player 6a. The player 6b includes a computer which operates in accordance with a control program stored in a memory. The control program is designed to enable the player 6b to implement processes mentioned later. The player 6b also includes a storage unit. A predetermined ID (a predetermined identification code word) is assigned to the player 6b. In the case where the player 6b is connected with the player 6a, the player 6b informs the player 6a of its own ID before contents data are transferred or copied. During the data transfer, the copy-source player 6a transmits the encryption-resultant contents data and the secondary encryption-resultant playback key data into the storage unit of the copy-destination player (the transfer-destination player) 6b. Thus, the encryption-resultant contents data and the secondary encryption-resultant playback key data are copied.

The contents sale system uses an accounting system designed as follows. The user (owner) of the player 6a is required to buy an electronic ticket on a prepaid basis. When the user buys an electronic ticket, a signal representing the corresponding balance (the corresponding ticket balance) is stored in an electronic purse provided in the player 6a. In other words, a predetermined amount of electronic money which corresponds to the value of the electronic ticket is stored in the electronic purse. The player 6a can be connected to a computer-based settlement box 7 provided with a device for wire-telephone communications with a computer-based account management server 8. In the case where the player 6a is connected with the settlement box 7, the balance represented by the signal in the electronic purse can be updated by the settlement box 7. In addition, the settlement box 7 can transmit accounting information, which relates to the balance at the electronic purse in the player 6a, to the account management server 8. The accounting management server 8 includes a communication device for wire-telephone communications with the management center MC. The accounting information relating to the balance at the electronic purse in the player 6a can be transmitted therefrom to the account management server 8 via the terminal apparatus 5 and the management center MC.

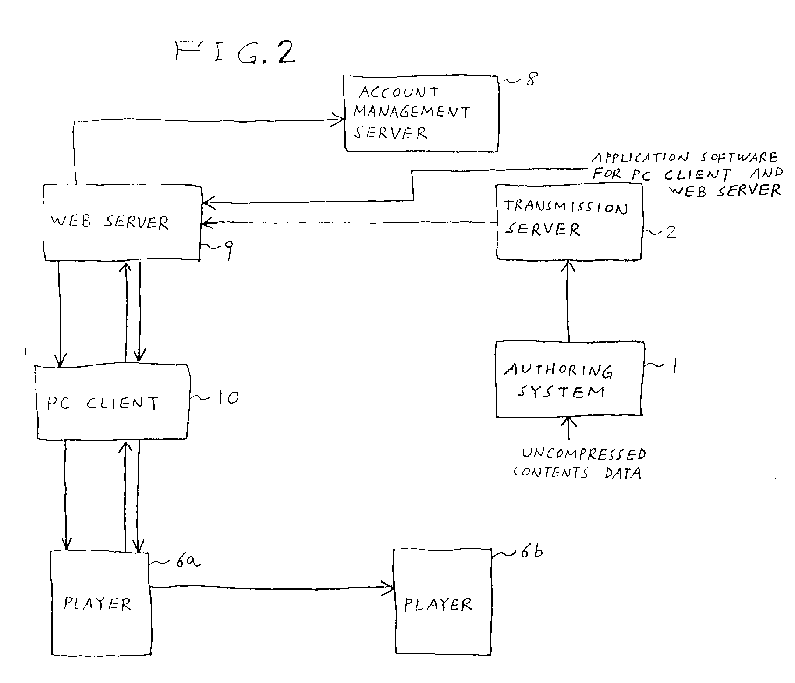

Fig. 2 shows an Internet-related portion of the contents sale system. With reference to Fig. 2, the Internet-related portion of the contents sale system includes a web server 9 and a PC client 10 for an Internet service. The web server 9 includes a computer which operates in accordance with a control program stored in a memory. The control program is designed to enable the web server 9 to implement processes mentioned later. The web server 9 may be a portable site or a data center. The PC client 10 includes a computer which operates in accordance with a control program stored in a memory. The control program is designed to enable the PC client 10 to implement processes mentioned later. The web server 9 is connected to the transmission server 2 and the account management server 8. The PC client 10 can be connected to the web server 9 via the Internet. The customer's player 6a can be connected with the PC client 10 via an IEEE1394 interface.

Composite data of a given format which include encryption-resultant contents data and primary encryption-resultant playback key data (first encryption-resultant playback key data) are transmitted from the authoring system unit 1 to the web server 9 via the transmission server 2.

In the case where the customer's player 6a is connected with the PC client 10 via the IEEE1394 interface while the PC client 10 is connected with the web server 9 via the Internet, the player 6a informs the web server 9 of its own ID via the connection between them. The web server 9 encrypts the primary encryption-resultant playback key data into secondary encryption-resultant playback key data (second encryption-resultant playback key data) in response to the ID of the player 6a. The ID is a first example of data peculiar to a terminal. The web server 9 downloads the encryption-resultant contents data and the secondary encryption-resultant playback key data to the player 6a via the PC client 10.

As previously mentioned, according to the accounting system, the user (owner) of the player 6a is required to buy an electronic ticket on a prepaid basis. When the user buys an electronic ticket, a signal representing the balance (the ticket balance) is stored in an electronic purse provided in the player 6a. In the case where the customer's player 6a is connected with the PC client 10 via the IEEE1394 interface while the PC client 10 is connected with the web server 9 via the Internet, accounting information relating to the balance represented by the signal in the electronic purse can be transmitted from the player 6a to the account management server 8 via the PC client 10 and the web server 9.

A computer in the account management server 8 operates in accordance with a control program stored in a memory. According to the control program, the account management server 8 collects the accounting information and signals of contents-data transfer histories (contents-data copying histories) concerning the players 6a and 6b via the terminal apparatus 5 and the management center MC, the settlement box 7, or the PC client 10 and the web server 9. The account management server 8 executes the management of copyrights on the basis of the accounting information and the contents-data transfer history signals.

Music-related data transferred from the terminal apparatus 5 to the player 6a, music-related data transferred from the PC client 10 to the player 6a, and music-related data transferred from the player 6a to the player 6b are of a given format. Specifically, the music-related data transferred from the terminal apparatus 5 or the PC client 10 to the player 6a contain a sale header, a sale sub header, and encryption-resultant contents data. Similarly, the music-related data transferred from the player 6a to the player 6b contain a sale header, a sale sub header, and encryption-resultant contents data. The encryption-resultant contents data include a contents header, a sound stream, text data, and extension data. The sound stream represents music contents. The text data represent tune names and artist names.

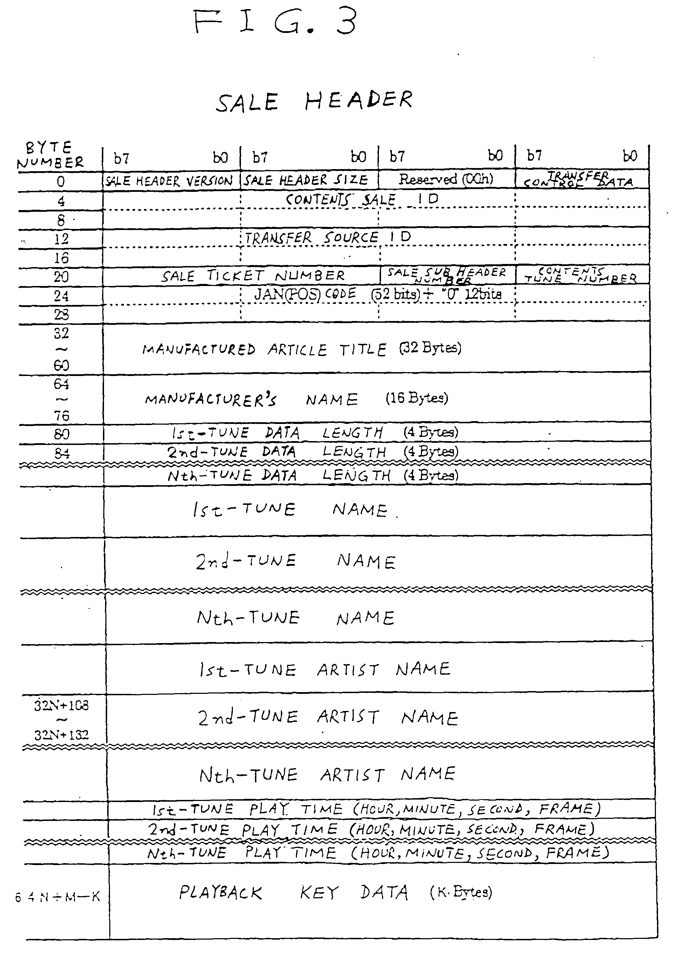

As shown in Fig. 3, a sale header has a size of 64N + M bytes which depends on the number "N" of tunes in the sale contents, where "M" denotes a predetermined natural number. In the sale header, one byte (the 4-th byte) is occupied by transfer control data, and K bytes, that is, the (64N + M - K)-th byte to the (64N + M)-th byte, are occupied by encryption-resultant playback key data (secondary encryption-resultant playback key data). Here, "K" denotes a predetermined natural number.

Specifically, bytes of the sale header in Fig. 3 are sequentially assigned to indications of different items as follows.
1 byte of a sale header version;
1 byte of a sale header size;
1 byte reserved;
1 byte of transfer control data;
8 bytes of a contents sale ID;
8 bytes of a transmission source ID (a transfer source ID);
2 bytes of a sale ticket number;
1 byte of a sale sub header number;
1 byte of a contents tune number;
32 bytes of a manufactured article title;
16 bytes of a manufacturer's name;
4 by N bytes of data lengths of respective tunes;
8 by N bytes of the names of the respective tunes;
8 by N bytes of the names of artists of the respective tunes;
4 by N bytes of the play times of the respective tunes; and
K bytes of encryption-resultant playback key data.

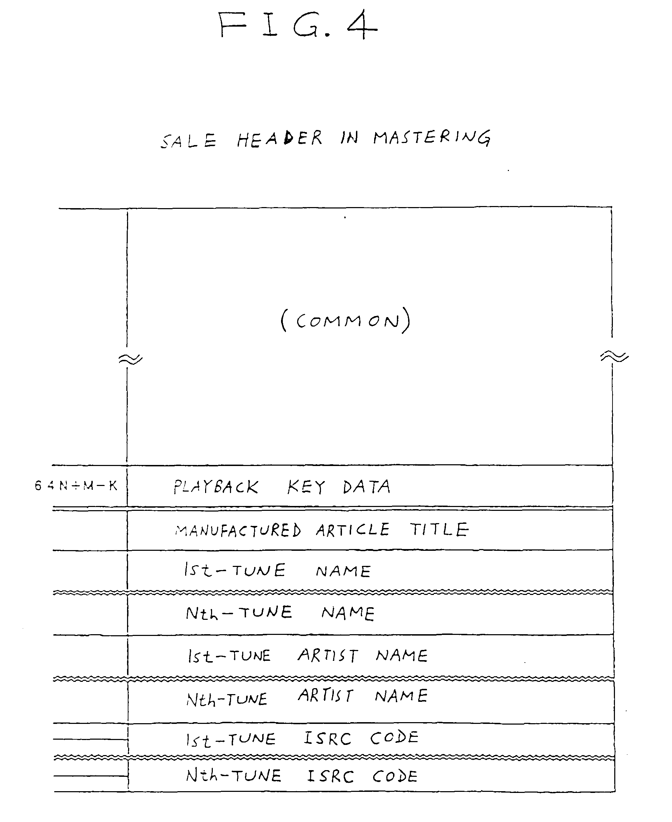

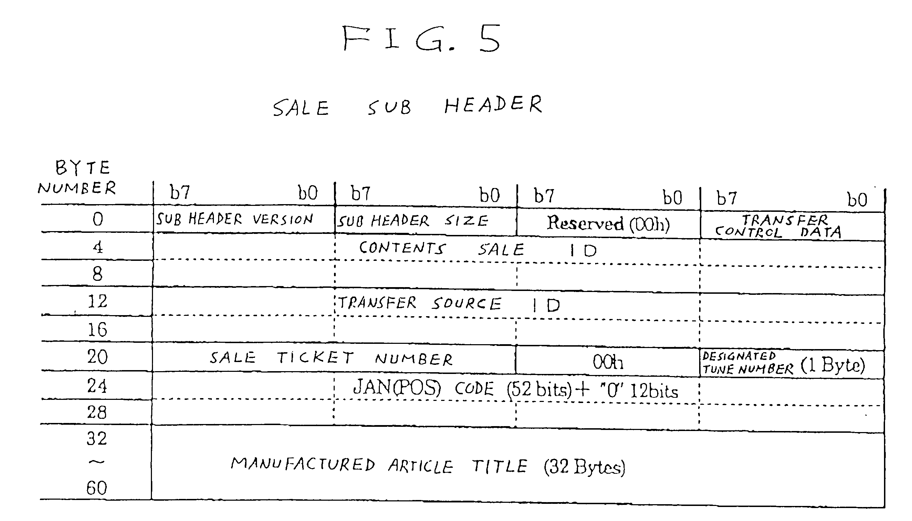

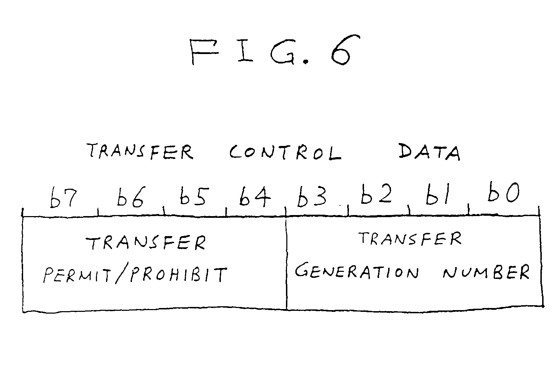

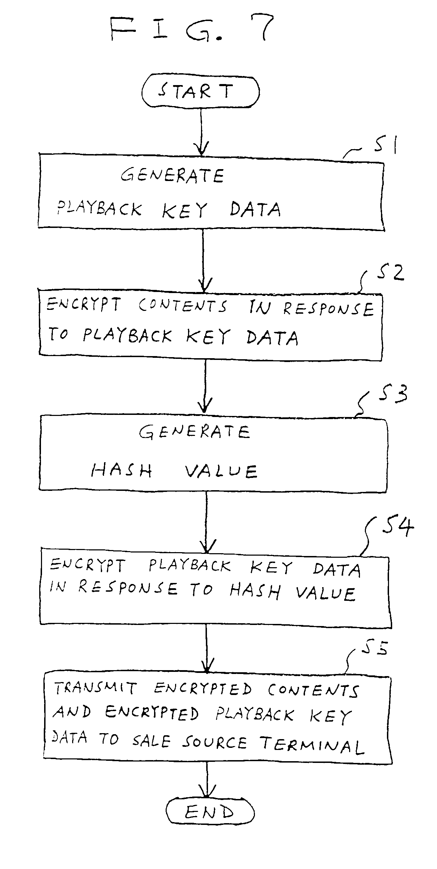

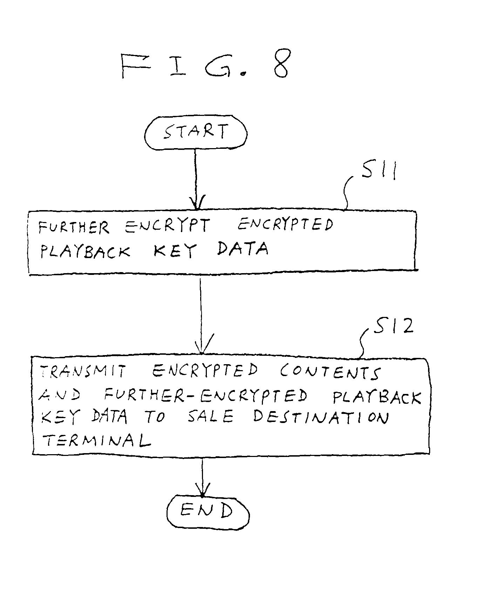

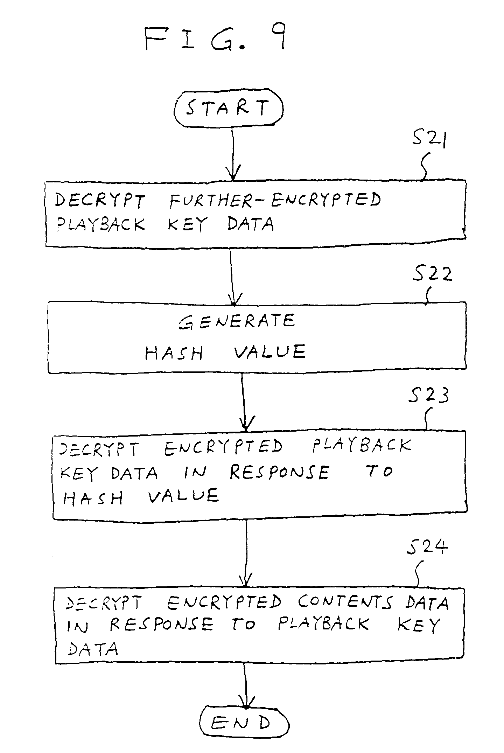

Fig. 4 shows the structure of a sale header provided and added by the authoring system unit 1 during a mastering process. Besides items in the sale header of Fig. 3, the sale header in Fig. 4 contains an information piece of a manufactured article title, information pieces of the names of N tunes, information pieces of the names of artists of the N tunes, and information pieces of ISRC (International Standard Recording Code) of the N tunes.

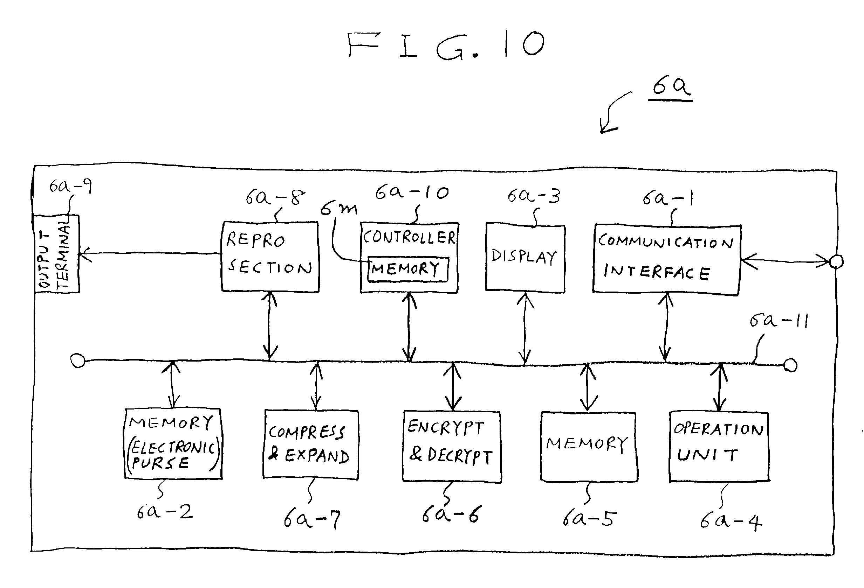

With reference to Fig. 5, bytes of a sale sub header are sequentially assigned to indications of different items as follows.
1 byte of a sub header version;
1 byte of a sub header size;
1 byte reserved;
1 byte of transfer control data;
8 bytes of a contents sale ID;
8 bytes of a transmission source ID (a transfer source ID);
2 bytes of a sale ticket number;
1 byte of a designated tune order number; and
32 bytes of a manufactured article title.

As shown in Fig. 6, the transfer control data in the sale header of Fig. 3, the sale header of Fig. 4, or the sale sub header of Fig. 5 contain four bits b0, b1, b2, and b3 occupied by a data piece representing a transfer generation number (a copy generation number), and four bits b4, b5, b6, and b7 occupied by a data piece representing whether transfer (copying) is prohibited or permitted.

Specifically, the transfer-generation-number data piece (the copy-generation-number data piece) b0, b1, b2, and b3 being "0000" is assigned to prohibition on transfer (copying). The transfer-generation-number data piece b0, b1, b2, and b3 being anyone between "0001" and "1111" is assigned to an indication of a transfer generation number (a copy generation number) and also permission to transfer (copy) contents data. The related copyright holder or the host side sets an initial number represented by the transfer-generation-number data piece. Each time transferring or copying contents data is executed, the transfer-source player or apparatus (the copy-source player or apparatus) processes the transferred data or the copied data so that the number represented by the transfer-generation-number data piece is decremented by "1". When the transfer-generation-number data piece reaches "0000", transferring or copying contents data is prohibited. For example, the transfer-source player or apparatus (the copy-source player or apparatus) is disabled by the transfer-generation-number data piece being "0000".

The transfer prohibition/permission data piece (the copying prohibition/permission data piece) b4, b5, b6, and b7 being "0000" is assigned to permission to transfer (copy) contents data. The transfer prohibition/permission data piece b4, b5, b6, and b7 being "0001" is assigned to prohibition on transfer (copying).

As previously mentioned, the authoring system unit 1 includes a computer which operates in accordance with a control program stored in a memory. Fig. 7 is a flowchart of a segment of the control program. As shown in Fig. 7, a first step S1 of the program segment generates α-byte playback key data in response to a random number for every sale header. Here, "α" denotes a predetermined natural number equal to, for example, 16.

A step S2 following the step S1 divides sale contents data into regions of a contents header, a sound stream, text data, and extension data respectively. The sound stream represents music contents. The text data represent tune names and artist names. The step S2 executes Exclusive-OR operation between each of the regions and the playback key data a bytes by a bytes. Thus, the step S2 encrypts or scrambles the sale contents data independently for the regions. In this way, the step S2 generates encryption-resultant contents data.

A step S3 subsequent to the step S2 generates α-byte data of a hash value on the basis of a sequence of characters in each sale header in the designation item order and a sequence of characters in each sale sub header in the designation item order according to a hash function (MD5).

A step S4 following the step S3 executes Exclusive-OR operation between the playback key data and the hash value data, thereby encrypting the playback key data into primary encryption-resultant playback key data for every sale header.

A step S5 subsequent to the step S4 places the primary encryption-resultant playback key data in an appointed area of every sale header. The step S5 transmits the encryption-resultant contents data and the primary encryption-resultant playback key data toward the kiosk terminal apparatus 5 via the equipments including the transmission server 2, or toward the web server 9 via the transmission server 2. Thus, the encryption-resultant contents data and the primary encryption-resultant playback key data are transmitted to a sale source terminal (the kiosk terminal apparatus 5 or the web server 9). After the step S5, the current execution cycle of the program segment ends.

In this way, the playback key data are encrypted by the steps S3 and S4. The encryption of the playback key data prohibits the decoding of the contents data if the combination of the sale header (the sale headers) and the contents data is altered.

The sale source terminal is the kiosk terminal apparatus 5 or the web server 9. The sale source terminal may be the PC client 10. The sale source terminal (the kiosk terminal apparatus 5 or the web server 9) includes a computer which operates in accordance with a control program stored in a memory. Fig. 8 is a flowchart of a segment of the control program. As shown in Fig. 8, a first step S11 of the program segment further encrypts the primary encryption-resultant playback key data into secondary encryption-resultant playback key data in response to a transfer-destination player ID (a copy-destination player ID, that is, the ID of the customer's player 6a) according to DES. Here, DES is short for "data encryption standards".

A step S12 following the step S11 transmits the encryption-resultant contents data and the secondary encryption-resultant playback key data to a sale destination terminal, that is, the customer's player 6a. It should be noted that the transmission of the encryption-resultant contents data and the secondary encryption-resultant playback key data from the web server 9 to the customer's player 6a is executed via the PC client 10. After the step S12, the current execution cycle of the program segment ends.

As previously mentioned, the customer's player 6a (the sale destination terminal) includes a computer which operates in accordance with a control program stored in a memory. Fig. 9 is a flowchart of a segment of the control program. The program segment in Fig. 9 relates to descrambling encryption-resultant contents data. As shown in Fig. 9, a first step S21 of the program segment decrypts the secondary encryption-resultant playback key data into the primary encryption-resultant playback key data in response to the ID of the customer's player 6a according to DES for every sale header.

A step S22 following the step S21 generates α-byte data of a hash value on the basis of a sequence of characters in each sale header in the designation item order and a sequence of characters in each sale sub header in the designation item order according to a hash function (MD5).

A step S23 subsequent to the step S22 executes Exclusive-OR operation between the primary encryption-resultant playback key data and the hash value data, thereby decrypting the primary encryption-resultant playback key data into the original playback key data for every sale header.

A step S24 following the step S23 executes Exclusive-OR operation between the encryption-resultant contents data and the original playback key data α bytes by α bytes, thereby decrypting or descrambling the encryption-resultant contents data into the compressed contents data. The step S24 expands the compressed contents data into the original contents data (the uncompressed contents data). The playback of the original contents data can be implemented in response to a customer's request. After the step S24, the current execution cycle of the program segment ends.

As previously mentioned, actual data such as contents data and text data are encrypted according to Exclusive-OR operation. During data reproduction, encryption-resultant actual data are required to be decrypted at a high rate. This requirement is met because it is possible to implement high-rate decryption of data which have been encrypted according to Exclusive-OR operation. On the other hand, non-actual data such as data representing headers are encrypted according to DES. In general, DES-based data encryption is effective in preventing a leakage of data contents.

The customer's players 6a and 6b have structures similar to each other. Only the player 6a will be explained below in detail. As shown in Fig. 10, the player 6a includes a communication interface 6a-1, a memory 6a-2, a display 6a-3, an operation unit 6a-4, a memory 6a-5, an encrypting and decrypting section 6a-6, a data compressing and expanding section 6a-7, a reproducing section 6a-8, an output terminal 6a-9, a controller 6a-10, and an internal bus 6a-11. The communication interface 6a-1, the memory 6a-2, the display 6a-3, the operation unit 6a-4, the memory 6a-5, the encrypting and decrypting section 6a-6, the data compressing and expanding section 6a-7, the reproducing section 6a-8, and the controller 6a-10 are connected via the internal bus 6a-11. The output terminal 6a-9 is connected to the reproducing section 6a-8.

The controller 6a-10 includes a combination of a CPU, a program memory, and another memory 6m. The controller 6a-10 operates in accordance with a control program stored in the program memory. According to the control program, the device 6a-10 controls the communication interface 6a-1, the memory 6a-2, the display 6a-3, the operation unit 6a-4, the memory 6a-5, the encrypting and decrypting section 6a-6, the data compressing and expanding section 6a-7, and the reproducing section 6a-8.

The communication interface 6a-1 is used for data communications (data transfer) with the kiosk terminal apparatus 5, the PC client 10, or the customer's player 6b. The memory 6a-2 stores a signal representing an electronic purse controlled by the controller 6a-10. Electronic money can be put into the electronic purse. Electronic money can be put out the electronic purse for payment. In general, a predetermined amount of electronic money is previously deposited in the electronic purse on a prepaid basis. Then, the amount of the electronic money in the electronic purse is reduced according to a contents charge. It should be noted that the prepaid procedure may be replaced by a credit procedure. According to an alternative example, an electronic ticket is previously provided in the electronic purse on a prepaid basis or a credit basis. Then, the ticket balance at the electronic purse is updated according to a contents charge.

The display 6a-3 is controlled by the controller 6a-10 to indicate the remaining amount of electronic money in the electronic purse, conditions of data communications with a communication opposite party (the kiosk terminal apparatus 5, the PC client 10, or the customer's player 6b), contents playback conditions, and permission/prohibition on copying. The operation unit 6a-4 can be actuated by a user. A command of searching plural data pieces for a desired data piece can be inputted by actuating the operation unit 6a-4. During playback, a command for sound volume control can be inputted by actuating the operation unit 6a-4. The memory 6a-5 is controlled by the controller 6a-10 to store header information and contents data transferred from a communication opposite party (the kiosk terminal apparatus 5, the PC client 10, or the customer's player 6b).

The encrypting and decrypting section 6a-6 is controlled by the controller 6a-10 to generate authentication data, and to encrypt and decrypt contents data, playback key data, and header information. The data compressing and expanding section 6a-7 is controlled by the controller 6a-10 to compress and expand data. In general, data to be transferred are compression-resultant data. Thus, an increased data transfer efficiency is available. Specifically, data are compressed, and then the compression-resultant data are transferred. Compression-resultant data are received, and then the compression-resultant data are expanded by the section 6a-7 if necessary. The reproducing section 6a-8 is controlled by the controller 6a-10 to reproduce an audio signal and text data from contents data. The reproduced audio signal and text data are fed from the reproducing section 6a-8 to external devices via the output terminal 6a-9.

The controller 6a-10 executes registering processes, the number of which is equal to a history number. During each of the registering processes, signals of various items are registered in the internal memory 6m. For example, a signal representing the number of times of history transfer, a signal representing a contents sale ID, a signal representing a transfer source ID, and transfer control data are registered in the memory 6m.

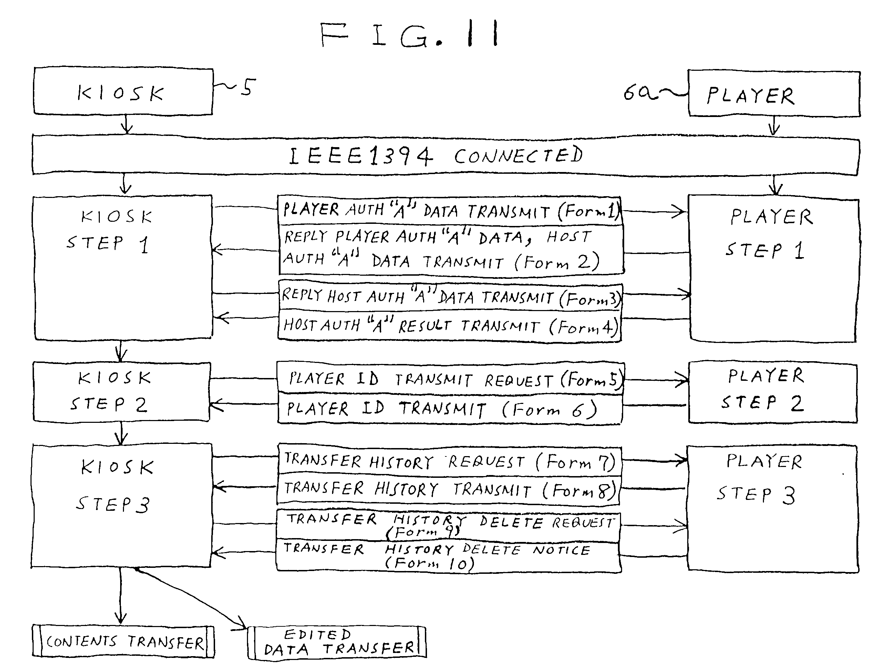

Figs. 11, 12, and 13 show a sequence of communications (data transfer) between the kiosk terminal apparatus 5 and the customer's player 6a. In Figs. 11, 12, and 13, "Form 1", "Form 2", ··· denote forms of transmitted signals respectively. The kiosk terminal apparatus 5 includes a portion similar to the player's structure in Fig. 10.

With reference to Fig. 11, in the case where the customer's player 6a is connected with the kiosk terminal apparatus 5 via the IEEE1394 interface, an encrypting and decrypting section in the kiosk terminal apparatus 5 generates original random-number authentication data D1. The random-number authentication data D1 have, for example, 8 bytes. The encrypting and decrypting section encrypts the random-number authentication data D1 into player authentication "A" data in response to a common key data piece K1 according to DES. The common key data piece K1 is selected from among common key data pieces K1-K6 which are held in common by the kiosk terminal apparatus 5, the players 6a and 6b, the settlement box 7, the web server 9, and the PC client 10. The player authentication "A" data are made into a form "1" having 8 bytes. A communication interface in the kiosk terminal apparatus 5 transmits the player authentication "A" data of the form "1" to the customer's player 6a.

The inner portion of the customer's player 6a receives the player authentication "A" data via the communication interface 6a-1. The encrypting and decrypting section 6a-6 in the customer's player 6a decrypts the player authentication "A" data into the random-number authentication data D1 in response to the common key data piece K1 according to DES. The encrypting and decrypting section 6a-6 encrypts the random-number authentication data D1 into reply player authentication "A" data in response to another common key data piece K2 according to DES. In addition, the encrypting and decrypting section 6a-6 generates original random-number authentication data D2. The random-number authentication data D2 have, for example, 8 bytes. The encrypting and decrypting section 6a-6 encrypts the random-number authentication data D2 into host authentication "A" data in response to still another common key data piece K3 according to DES. The reply player authentication "A" data and the host authentication "A" data are made into a form "2". The customer's player 6a transmits the reply player authentication "A" data and the host authentication "A" data of the form "2" to the kiosk terminal apparatus 5.

An inner portion of the kiosk terminal apparatus 5 receives the reply player authentication "A" data and the host authentication "A" data via the communication interface. The encrypting and decrypting section in the kiosk terminal apparatus 5 decrypts the reply player authentication "A" data into the random-number authentication data Dl in response to the common key data piece K2 according to DES. A controller in the kiosk terminal apparatus 5 collates the decryption-resultant random-number authentication data D1 with the original random-number authentication data D1.

In the case where the controller in the kiosk terminal apparatus 5 decides that the decryption-resultant random-number authentication data D1 are different from the original random-number authentication data D1, the kiosk terminal apparatus 5 repeats the previously-mentioned steps at most twice. If the decryption-resultant random-number authentication data D1 still remain different from the original random-number authentication data D 1, the signal processing by the kiosk terminal apparatus 5 is suspended.

In the case where the controller in the kiosk terminal apparatus 5 decides that the decryption-resultant random-number authentication data D1 are equal to the original random-number authentication data D1, the encrypting and decrypting section in the kiosk terminal apparatus 5 decrypts the host authentication "A" data into the random-number authentication data D2 in response to the common key data piece K3 according to DES. The encrypting and decrypting section encrypts the random-number authentication data D2 into reply host authentication "A" data in response to another common key data piece K4 according to DES. The reply host authentication "A" data are made into a form "3". The kiosk terminal apparatus 5 transmits the reply host authentication "A" data of the form "3" to the customer's player 6a.

The encrypting and decrypting section 6a-6 in the customer's player 6a decrypts the reply host authentication "A" data into the random-number authentication data D2 in response to the common key data piece K4 according to DES. The controller 6a-10 in the customer's player 6a collates the decryption-resultant random-number authentication data D2 with the original random-number authentication data D2.

In the case where the controller 6a-10 in the customer's player 6a decides that the decryption-resultant random-number authentication data D2 are equal to the original random-number authentication data D2, the customer's player 6a transmits a form-"4" signal of the positive result of host authentication "A" to the kiosk terminal apparatus 5. Thereafter, the customer's player 6a executes later steps.

In the case where the controller 6a-10 in the customer's player 6a decides that the decryption-resultant random-number authentication data D2 are different from the original random-number authentication data D2, the customer's player 6a transmits a form-"4" signal of the negative result of host authentication "A" to the kiosk terminal apparatus 5. Thereafter, the customer's player 6a is inhibited from executing later steps.

Subsequently, the kiosk terminal apparatus 5 transmits a form-"5" signal of a player ID transmission request to the customer's player 6a. The customer's player 6a responds to the signal of the player ID transmission request as follows. In the customer's player 6a, the encrypting and decrypting section 6a-6 uses the random-number authentication data D2 as a key and encrypts the ID of the player 6a into the encryption-resultant player ID in response to the key according to DES on a 16-byte by 16-byte processing basis. The customer's player 6a transmits a form-"6" signal of its own encryption-resultant player ID to the kiosk terminal apparatus 5.

In the kiosk terminal apparatus 5, the encrypting and decrypting section uses the random-number authentication data D2 as a key and decrypts the encryption-resultant player ID into the original player ID in response to the key according to DES on a 16-byte by 16-byte processing basis. In the kiosk terminal apparatus 5, a signal representative of the decryption-resultant player ID is stored in a memory.

In the case where the kiosk terminal apparatus 5 fails to receive a form-"6" signal of an encryption-resultant player ID from the customer's player 6a, the kiosk terminal apparatus 5 transmits a form-"5" signal of a player ID transmission request to the customer's player 6a again. If the kiosk terminal apparatus 5 still does not receive a form-"6" signal of an encryption-resultant player ID, the kiosk terminal apparatus 5 suspends processing operation with respect to the customer's player 6a.

Then, the kiosk terminal apparatus 5 transmits a form-"7" signal of a transfer history transmission request (a copy history transmission request) to the customer's player 6a. In response to the signal of the transfer history transmission request, the controller 6a-10 in the customer's player 6a detects whether or not received transfer-history information (received copy-history information) exists in the internal memory 6m. The transfer-history information contains a signal representing a history number, a signal representing the number of times of history transfer, a signal representing a contents sale ID, a signal representing a transfer source ID, and transfer control data.

In the case where received transfer-history information (received copy-history information) exists in the memory 6m, the encrypting and decrypting section 6a-6 in the customer's player 6a uses the random-number authentication data D2 as a key and encrypts all pieces of the received transfer-history information into an encryption-resultant transfer history (an encryption-resultant copy history) in response to the key according to DES in the sale contents reception order. The customer's player 6a transmits a form-"8" signal of the encryption-resultant transfer history to the kiosk terminal apparatus 5. In the kiosk terminal apparatus 5, the encrypting and decrypting section uses the random-number authentication data D2 as a key and decrypts the encryption-resultant transfer history into the original transfer history (the original copy history) in response to the key according to DES. Subsequently, the kiosk terminal apparatus 5 transmits a form-"9" signal of a transfer history deletion request (a copy history deletion request) to the customer's player 6a. In response to the signal of the transfer history deletion request, the controller 6a-10 in the customer's player 6a deletes the transfer-history information (the copy-history information) from the internal memory 6m. In the absence of a transfer history deletion request, the controller 6a-10 in the customer's player 6a increments the number of times of history transfer by "1" for each of the pieces of the history-transfer information. The controller 6a-10 in the customer's player 6a stores the resultant history-transfer information in the internal memory 6m. After the transfer-history information is deleted, the customer's player 6a transmits a form-" 10" signal of a transfer history deletion notice (a copy history deletion notice) to the kiosk terminal apparatus 5. During a later stage, the transfer-history information is fed from the kiosk terminal apparatus 5 to the account management server 8, and is used for copyright management therein. After the transmission of the form-" 10" signal of the transfer history deletion notice, the communication sequence advances to either a contents transfer stage or an edited data transfer stage in accordance with operation of the kiosk terminal apparatus 5.

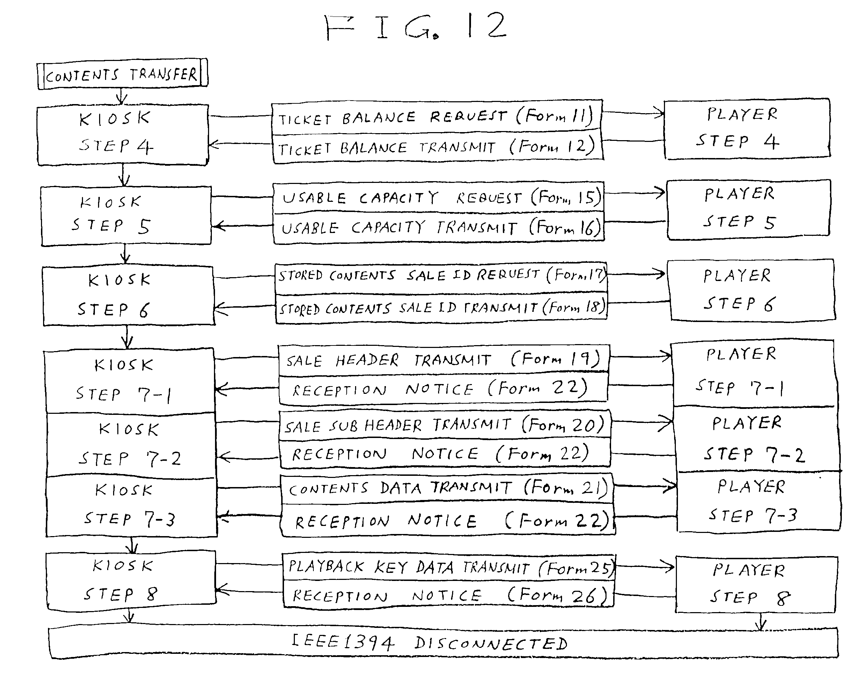

With reference to Fig. 12, during the contents transfer stage, the kiosk terminal apparatus 5 transmits a form-"11" signal of a ticket balance transmission request to the customer's player 6a. In response to the signal of the ticket balance transmission request, the controller 6a-10 in the customer's player 6a refers to the ticket balance at the electronic purse. The encrypting and decrypting section 6a-6 in the customer's player 6a uses the random-number authentication data D2 as a key and encrypts the ticket balance in response to the key according to DES on a 16-byte by 16-byte processing basis. The customer's player 6a transmits a form-"12" signal of the encryption-resultant ticket balance to the kiosk terminal apparatus 5. In the kiosk terminal apparatus 5, the encrypting and decrypting section uses the random-number authentication data D2 as a key and decrypts the encryption-resultant ticket balance into the original ticket balance in response to the key according to DES on a 16-byte by 16-byte processing basis. The kiosk terminal apparatus 5 stores a signal of the original ticket balance into the memory. When the original ticket balance means zero, the kiosk terminal apparatus 5 suspends processing operation. In this case, the kiosk terminal apparatus 5 may transmit zero-ticket-balance information to the account management server 8. The account management server 8 executes a known process in response to the zero-ticket-balance information.

In the case where the kiosk terminal apparatus 5 fails to receive a form-" 12" signal of an encryption-resultant ticket balance from the customer's player 6a, the kiosk terminal apparatus 5 transmits a form-"11" signal of a ticket balance transmission request to the customer's player 6a again. If the kiosk terminal apparatus 5 still does not receive a form-"12" signal of an encryption-resultant ticket balance, the kiosk terminal apparatus 5 suspends processing operation with respect to the customer's player 6a.

After the reception of the form-" 12" signal of the encryption-resultant ticket balance, the kiosk terminal apparatus 5 transmits a form-" 15" signal of a usable-memory-capacity transmission request (an unoccupied-memory-capacity transmission request) to the customer's player 6a. In response to the signal of the usable-memory-capacity transmission request, the controller 6a-10 in the customer's player 6a refers to a portion of data in the memory 6a-5 which represents a header/contents usable capacity. Thereby, the controller 6a-10 detects a usable memory capacity (an unoccupied memory capacity). The transmits a form-" 16" signal of the usable memory capacity to the kiosk terminal apparatus 5. The kiosk terminal apparatus 5 stores information of the usable memory capacity in the memory. When the usable memory capacity is null, the kiosk terminal apparatus 5 suspends processing operation. In this case, the kiosk terminal apparatus 5 may output a signal for providing a usable memory capacity.

In the case where the kiosk terminal apparatus 5 fails to receive a form-" 16" signal of a usable memory capacity from the customer's player 6a, the kiosk terminal apparatus 5 transmits a form-" 15" signal of a usable-memory-capacity transmission request to the customer's player 6a again. If the kiosk terminal apparatus 5 still does not receive a form-" 16" signal of a usable memory capacity, the kiosk terminal apparatus 5 suspends processing operation with respect to the customer's player 6a.

Subsequently, the kiosk terminal apparatus 5 transmits a form-"17" signal of a stored contents sale ID transmission request to the customer's player 6a. In response to the signal of the stored contents sale ID transmission request, the customer's player 6a operates as follows. When stored contents sale ID information is in the memory 6a-5, the encrypting and decrypting section 6a-6 uses the random-number authentication data D2 as a key and encrypts all pieces of the stored contents sale ID information in response to the key according to DES on a 16-byte by 16-byte processing basis. Then, the customer's player 6a transmits a form-"18" signal of the encryption-resultant stored contents sale ID information to the kiosk terminal apparatus 5. When stored contents sale ID information is absent from the memory 6a-5, the customer's player 6a transmits a form-" 18" signal of the absence of stored contents sale ID information to the kiosk terminal apparatus 5.

Then, the kiosk terminal apparatus 5 transmits a sale header of a form "19" to the customer's player 6a. The customer's player 6a transmits a form-"22" signal of a data reception notice to the kiosk terminal apparatus 5 when successfully receiving the sale header. Thereafter, the kiosk terminal apparatus 5 transmits a sale sub header of a form "20" to the customer's player 6a. The customer's player 6a transmits a form-"22" signal of a data reception notice to the kiosk terminal apparatus 5 when successfully receiving the sale sub header. Then, the kiosk terminal apparatus 5 transmits contents data (encryption-resultant contents data) of a form "21" to the customer's player 6a. The customer's player 6a transmits a form-"22" signal of a data reception notice to the kiosk terminal apparatus 5 when successfully receiving the contents data. Subsequently, in the kiosk terminal apparatus 5, the encrypting and decrypting section encrypts the primary encryption-resultant playback key data into secondary encryption-resultant playback key data (second encryption-resultant playback key data) in response to the ID of the player 6a. The kiosk terminal apparatus 5 transmits the secondary encryption-resultant playback key data of a form "25" to the customer's player 6a.

In the customer's player 6a, the secondary encryption-resultant playback key data are placed in the corresponding area of the sale header represented by information in the memory 6a-5. The controller 6a-10 reduces the electronic money (the ticket balance) in the electronic purse by an amount corresponding to the sale ticket number or an amount corresponding to the price of the contents data. The controller 6a-10 stores information of a received contents transfer history (a received contents copy history) into the internal memory 6m. Then, the customer's player 6a transmits a form-"26" signal of a data reception notice to the kiosk terminal apparatus 5 which indicates successful reception of the secondary encryption-resultant playback key data. Thereafter, the customer's player 6a is disconnected from the kiosk terminal apparatus 5. In other words, the IEEE1394 interface between the kiosk terminal apparatus 5 and the customer's player 6a is disconnected.

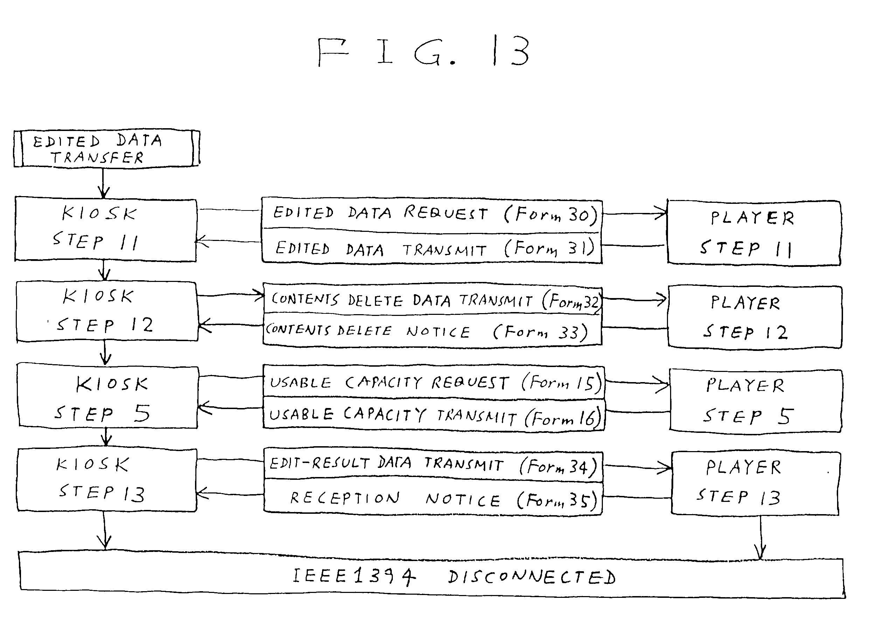

With reference to Fig. 13, during the edited data transfer stage, the kiosk terminal apparatus 5 transmits a form-"30" signal of a request for transmission of edited data (data to be edited) to the customer's player 6a. In response to the signal of the edited data transmission request, the customer's player 6a transmits edited data (data to be edited) of a form "31" to the kiosk terminal apparatus 5. The edited data represent tunes to be edited which are arranged in the playback order or the order according to the data lengths of the tunes, the names of the respective tunes, or the names of the artists of the respective tunes. Then, the kiosk terminal apparatus 5 stores the received edited data in the memory, and transmits contents deletion data of a form "32" to the customer's player 6a. In response to the contents deletion data, the customer's player 6a executes the deletion of a target tune from a playback tune list, the deletion of the sale contents data and the sale sub header, and a process of inhibiting the retransmission of the sale header or deleting the sale header. The customer's player 6a transmits a form-"33" signal of a contents deletion notice to the kiosk terminal apparatus 5. Subsequently, the kiosk terminal apparatus 5 transmits a form-"15" signal of a usable-memory-capacity transmission request (an unoccupied-memory-capacity transmission request) to the customer's player 6a. In response to the signal of the usable-memory-capacity transmission request, the customer's player 6a transmits a form-" 16" signal of a usable memory capacity (an unoccupied memory capacity) to the kiosk terminal apparatus 5.

Then, the kiosk terminal apparatus 5 edits the subject data to change the tune playback order. The kiosk terminal apparatus 5 transmits the editing-resultant data of a form "34" to the customer's player 6a. The customer's player 6a replaces the before-editing data with the editing-resultant data to execute the change of the tune playback order. In addition, the customer's player 6a transmits a form-"35" signal of a data reception notice to the kiosk terminal apparatus 5 when successfully receiving the editing-resultant data. Thereafter, the customer's player 6a is disconnected from the kiosk terminal apparatus 5. In other words, the IEEE1394 interface between the kiosk terminal apparatus 5 and the customer's player 6a is disconnected.

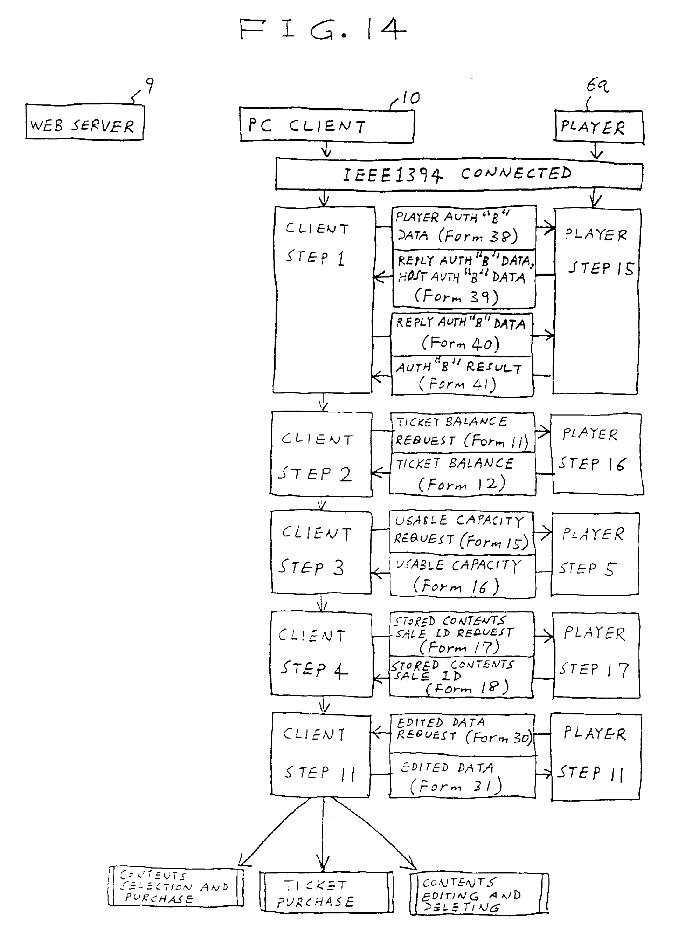

Figs. 14, 15, 16, 17, 18, and 19 show a sequence of communications among the web server 9, the PC client 10, and the customer's player 6a. In Figs. 14-19, "Form 38", "Form 39", ··· denote forms of transmitted signals respectively.

With reference to Fig. 14, in the case where the customer's player 6a is connected with the PC client 10 via the IEEE1394 interface, the PC client 10 transmits player authentication "B" data of a form "38" to the customer's player 6a. In response to the player authentication "B" data, the customer's player 6a transmits reply player authentication "B" data and host authentication "B" data of a form "39" to the PC client 10. Then, the PC client 10 transmits reply host authentication "B" data of a form "40" to the customer's player 6a. In response to the reply host authentication "B" data, the customer's player 6a transmits a form-"41" signal of the result of host authentication "B" to the PC client 10.

Subsequently, the PC client 10 transmits a form-" 11" signal of a ticket balance transmission request to the customer's player 6a. In response to the signal of the ticket balance transmission request, the customer's player 6a transmits a form-" 12" signal of a ticket balance to the PC client 10. Then, the PC client 10 transmits a form-" 15" signal of a usable-memory-capacity transmission request (an unoccupied-memory-capacity transmission request) to the customer's player 6a. In response to the signal of the usable-memory-capacity transmission request, the customer's player 6a transmits a form-" 16" signal of a usable memory capacity (an unoccupied memory capacity) to the PC client 10. Thereafter, the PC client 10 transmits a form-" 17" signal of a stored contents sale ID transmission request to the customer's player 6a. In response to the signal of the stored contents sale ID transmission request, the customer's player 6a transmits a form-" 18" signal of a stored contents sale ID to the PC client 10. Then, the PC client 10 transmits a form-"30" signal of a request for transmission of edited data (data to be edited) to the customer's player 6a. In response to the signal of the edited data transmission request, the customer's player 6a transmits edited data (data to be edited) of a form "31" to the PC client 10. Subsequently, the communication sequence advances to one of a contents selection and purchase stage, a ticket purchase stage, and a contents editing and deleting stage in accordance with a user's request which is inputted by operating the PC client 10.

The authentication between the PC client 10 and the customer's player 6a is similar to the authentication between the kiosk terminal apparatus 5 and the customer's player 6a except that the reply player authentication "B" data are encrypted in response to a common key data piece K5, and the reply host authentication "B" data are encrypted in response to a common key data piece K6.

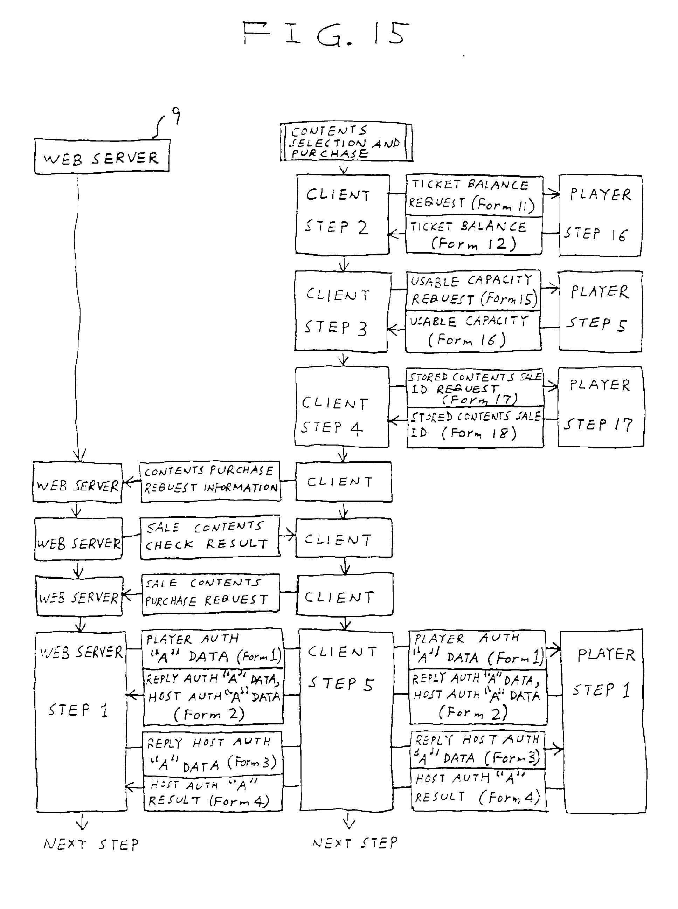

With reference to Fig. 15, during the contents selection and purchase stage, the PC client 10 transmits a form-" 11" signal of a ticket balance transmission request to the customer's player 6a. In response to the signal of the ticket balance transmission request, the customer's player 6a transmits a form-" 12" signal of a ticket balance to the PC client 10. Then, the PC client 10 transmits a form-" 15" signal of a usable-memory-capacity transmission request (an unoccupied-memory-capacity transmission request) to the customer's player 6a. In response to the signal of the usable-memory-capacity transmission request, the customer's player 6a transmits a form-" 16" signal of a usable memory capacity (an unoccupied memory capacity) to the PC client 10. Subsequently, the PC client 10 transmits a form-" 17" signal of a stored contents sale ID transmission request to the customer's player 6a. In response to the signal of the stored contents sale ID transmission request, the customer's player 6a transmits a form-" 18" signal of a stored contents sale ID to the PC client 10.

Then, the PC client 10 transmits contents purchase request information to the web server 9. Next, the web server 9 transmits a signal of a sale contents check result to the PC client 10. Thereafter, the PC client 10 transmits a signal of a contents purchase request to the web server 9. The web server 9 transmits player authentication "A" data of a form "1" to the PC client 10, and the PC client 10 transmits the player authentication "A" data to the customer's player 6a. In response to the player authentication "A" data, the customer's player 6a transmits reply player authentication "A" data and host authentication "A" data of a form "2" to the PC client 10. Then, the PC client 10 transmits the reply player authentication "A" data and the host authentication "A" data to the web server 9. Next, the web server 9 transmits reply host authentication "A" data of a form "3" to the PC client 10, and the PC client 10 transmits the reply host authentication "A" data to the customer's player 6a. In response to the reply host authentication "A" data, the customer's player 6a transmits a form-"4" signal of the result of host authentication "A" to the PC client 10. Then, the PC client 10 transmits the signal of the host authentication "A" result to the web server 9.

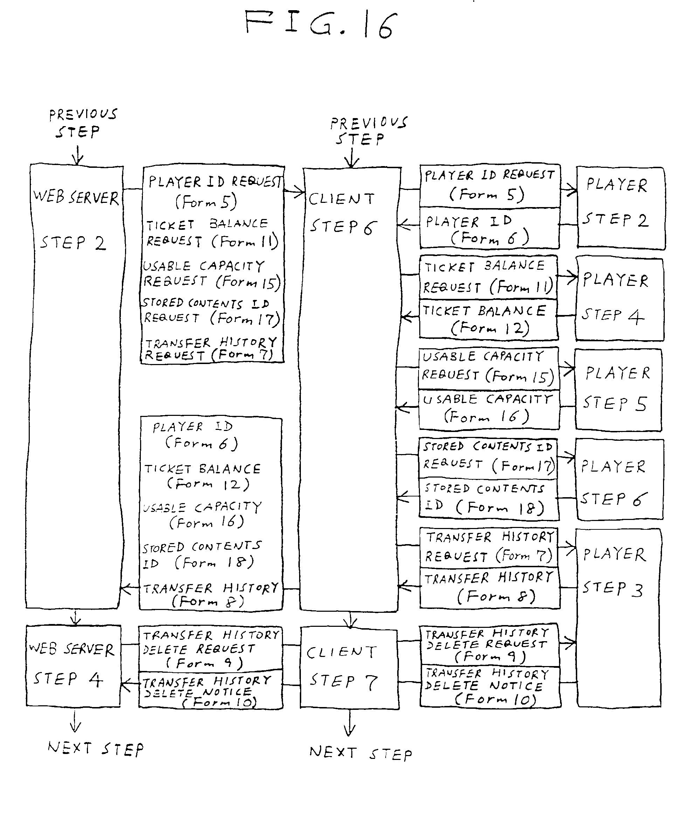

Subsequently, as shown in Fig. 16, the web server 9 transmits a form-"5" signal of a player ID transmission request, a form-" 11" signal of a ticket balance transmission request, a form-" 15" signal of a usable-memory-capacity transmission request (an unoccupied-memory-capacity transmission request), a form-"17" signal of a stored contents sale ID transmission request, and a form-"7" signal of a transfer history transmission request (a copy history transmission request) to the PC client 10. Then, the PC client 10 transmits the signal of the player ID transmission request to the customer's player 6a. In response to the signal of the player ID transmission request, the customer's player 6a transmits a form-"6" signal of its own player ID to the PC client 10. Then, the PC client 10 transmits the signal of the ticket balance transmission request to the customer's player 6a. In response to the signal of the ticket balance transmission request, the customer's player 6a transmits a form-" 12" signal of a ticket balance to the PC client 10. Next, the PC client 10 transmits the signal of the usable-memory-capacity transmission request (the unoccupied-memory-capacity transmission request) to the customer's player 6a. In response to the signal of the usable-memory-capacity transmission request, the customer's player 6a transmits a form-"16" signal of a usable memory capacity (an unoccupied memory capacity) to the PC client 10. Subsequently, the PC client 10 transmits the signal of the stored contents sale ID transmission request to the customer's player 6a. In response to the signal of the stored contents sale ID transmission request, the customer's player 6a transmits a form-"18" signal of a stored contents sale ID to the PC client 10. Next, the PC client 10 transmits the signal of the transfer history transmission request (the copy history transmission request) to the customer's player 6a. In response to the signal of the transfer history transmission request, the customer's player 6a transmits a form-"8" signal of a transfer history (a copy history) to the PC client 10. Thereafter, the PC client 10 transmits the signal of the player ID, the signal of the ticket balance, the signal of the usable memory capacity, the signal of the stored contents sale ID, and the signal of the transfer history to the web server 9. The signal of the transfer history will be transmitted from the web server 9 to the account management server 8.

Subsequently, the web server 9 transmits a form-"9" signal of a transfer history deletion request (a copy history deletion request) to the PC client 10, and the PC client 10 transmits the signal of the transfer history deletion request to the customer's player 6a. In response to the signal of the transfer history deletion request, the controller 6a-10 in the customer's player 6a deletes the transfer-history information (the copy-history information) from the internal memory 6m. Then, the customer's player 6a transmits a form-" 10" signal of a transfer history deletion notice (a copy history deletion notice) to the PC client 10. Then, the PC client 10 transmits the signal of the transfer history deletion notice to the web server 9.

The information pieces represented by the above-indicated signals transmitted among the customer's player 6a, the PC client 10, and the web server 9 except the usable memory capacity result from DES encryption using the host authentication "A" data as a key.

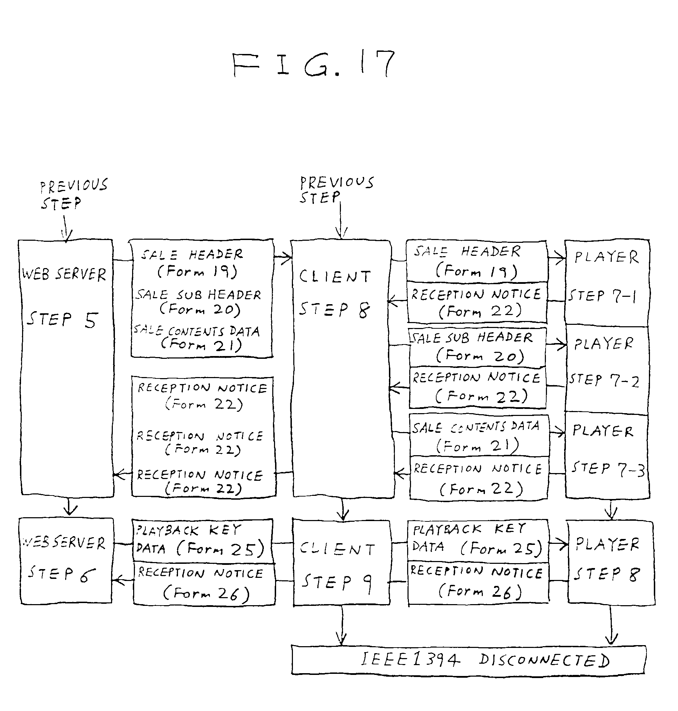

Next, as shown in Fig. 17, the web server 9 transmits a sale header of a form "19", a sale sub header of a form "20", and contents data (encryption-resultant contents data) of a form "21" to the PC client 10. Subsequently, the PC client 10 transmits the sale header to the customer's player 6a. The customer's player 6a transmits a form-"22" signal of a data reception notice to the PC client 10 when successfully receiving the sale header. Then, the PC client 10 transmits the sale sub header to the customer's player 6a. The customer's player 6a transmits a form-"22" signal of a data reception notice to the PC client 10 when successfully receiving the sale sub header. Next, the PC client 10 transmits the contents data (the encryption-resultant contents data) to the customer's player 6a. The customer's player 6a transmits a form-"22" signal of a data reception notice to the PC client 10 when successfully receiving the contents data. In the customer's player 6a, the controller 6a-10 stores information of the sale header, information of the sale sub header, and the contents data into the memory 6a-5. The PC client 10 transmits the signals of the data reception notices, which have been received from the customer's player 6a, to the web server 9.

Subsequently, the web server 9 transmits playback key data (secondary encryption-resultant playback key data) of a form "25" to the PC client 10, and the PC client 10 transmits the playback key data to the customer's player 6a. In the customer's player 6a, the playback key data are placed in the corresponding area of the sale header represented by information in the memory 6a-5. The controller 6a-10 reduces the electronic money (the ticket balance) in the electronic purse by an amount corresponding to the sale ticket number or an amount corresponding to the price of the contents data. The controller 6a-10 stores information of a received contents transfer history (a received contents copy history) into the internal memory 6m. Then, the customer's player 6a transmits a form-"26" signal of a data reception notice to the PC client 10 which indicates successful reception of the playback key data (the secondary encryption-resultant playback key data). The PC client 10 transmits the signal of the data reception notice to the web server 9. Thereafter, the customer's player 6a is disconnected from the PC client 10. In other words, the IEEE1394 interface between the PC client 10 and the customer's player 6a is disconnected.

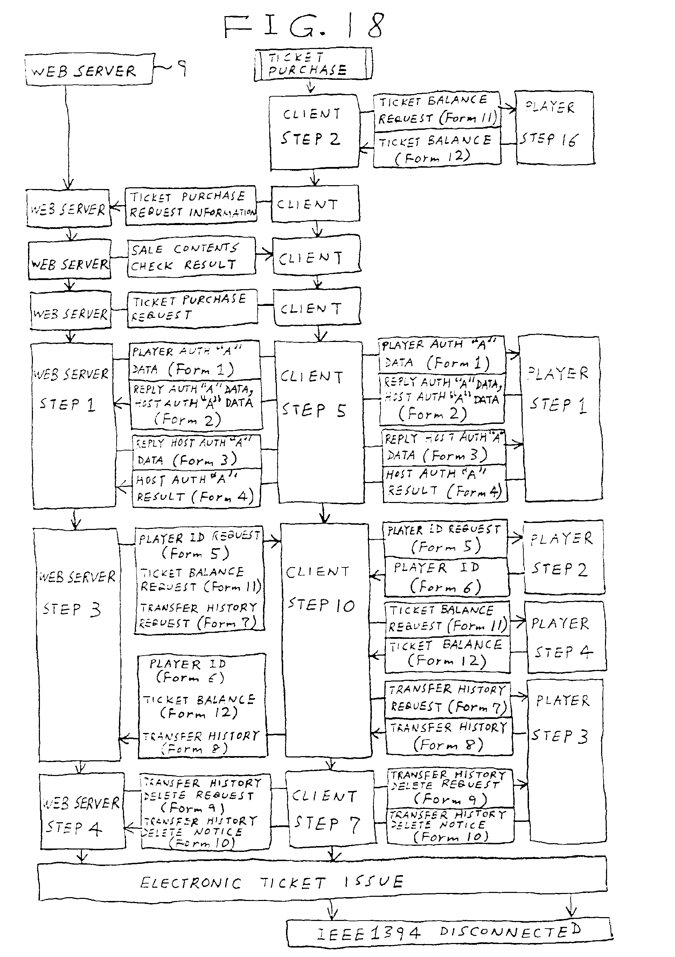

With reference to Fig. 18, during the ticket purchase stage, the PC client 10 transmits a form-"11" signal of a ticket balance transmission request to the customer's player 6a. In response to the signal of the ticket balance transmission request, the customer's player 6a transmits a form-"12" signal of a ticket balance to the PC client 10. Then, the PC client 10 transmits ticket purchase request information to the web server 9. Next, the web server 9 transmits a signal of a sale contents check result to the PC client 10.

Subsequently, the PC client 10 transmits a signal of a ticket purchase request to the web server 9. Thereafter, the web server 9 transmits player authentication "A" data of the form "1" to the PC client 10, and the PC client 10 transmits the player authentication "A" data to the customer's player 6a. In response to the player authentication "A" data, the customer's player 6a transmits reply player authentication "A" data and host authentication "A" data of the form "2" to the PC client 10. Then, the PC client 10 transmits the reply player authentication "A" data and the host authentication "A" data to the web server 9. Next, the web server 9 transmits reply host authentication "A" data of the form "3" to the PC client 10, and the PC client 10 transmits the reply host authentication "A" data to the customer's player 6a. In response to the reply host authentication "A" data, the customer's player 6a transmits a form-"4" signal of the result of host authentication "A" to the PC client 10. Then, the PC client 10 transmits the signal of the host authentication "A" result to the web server 9.

Next, the web server 9 transmits a form-"5" signal of a player ID transmission request, a form-" 11" signal of a ticket balance transmission request, and a form-"7" signal of a transfer history transmission request (a copy history transmission request) to the PC client 10. Then, the PC client 10 transmits the signal of the player ID transmission request to the customer's player 6a. In response to the signal of the player ID transmission request, the customer's player 6a transmits a form-"6" signal of its own player ID to the PC client 10. Then, the PC client 10 transmits the signal of the ticket balance transmission request to the customer's player 6a. In response to the signal of the ticket balance transmission request, the customer's player 6a transmits a form-" 12" signal of a ticket balance to the PC client 10. Next, the PC client 10 transmits the signal of the transfer history transmission request (the copy history transmission request) to the customer's player 6a. In response to the signal of the transfer history transmission request, the customer's player 6a transmits a form-"8" signal of a transfer history (a copy history) to the PC client 10. Thereafter, the PC client 10 transmits the signal of the player ID, the signal of the ticket balance, and the signal of the transfer history to the web server 9.

Subsequently, the web server 9 transmits a form-"9" signal of a transfer history deletion request (a copy history deletion request) to the PC client 10, and the PC client 10 transmits the signal of the transfer history deletion request to the customer's player 6a. In response to the signal of the transfer history deletion request, the customer's player 6a transmits a form-" 10" signal of a transfer history deletion notice (a copy history deletion notice) to the PC client 10. Then, the PC client 10 transmits the signal of the transfer history deletion notice to the web server 9. Next, an electronic ticket issuing process of a form "37" is implemented. Thereafter, the customer's player 6a is disconnected from the PC client 10. In other words, the IEEE1394 interface between the PC client 10 and the customer's player 6a is disconnected.

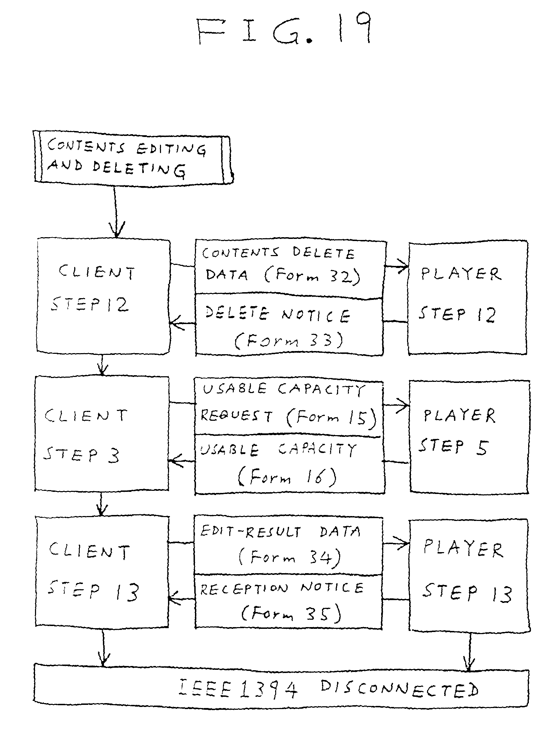

The contents editing and deleting stage is implemented while the customer's player 6a remains connected with the PC client 10 but the PC client 10 continues to be out of connection with the web server 9. With reference to Fig. 19, during the contents editing and deleting stage, the PC client 10 transmits contents deletion data of a form "32" to the customer's player 6a. In response to the contents deletion data, the customer's player 6a executes the deletion of a target tune from a playback tune list, the deletion of the sale contents data and the sale sub header, and a process of inhibiting the retransmission of the sale header or deleting the sale header. The customer's player 6a transmits a form-"33" signal of a contents deletion notice to the PC client 10. Subsequently, the PC client 10 transmits a form-" 15" signal of a usable-memory-capacity transmission request (an unoccupied-memory-capacity transmission request) to the customer's player 6a. In response to the signal of the usable-memory-capacity transmission request, the customer's player 6a transmits a form-" 16" signal of a usable memory capacity (an unoccupied memory capacity) to the PC client 10. Then, the PC client 10 transmits editing-resultant data of a form "34" to the customer's player 6a. The customer's player 6a transmits a form-"35" signal of a data reception notice to the PC client 10 when successfully receiving the editing-resultant data. Thereafter, the customer's player 6a is disconnected from the PC client 10. In other words, the IEEE1394 interface between the PC client 10 and the customer's player 6a is disconnected.

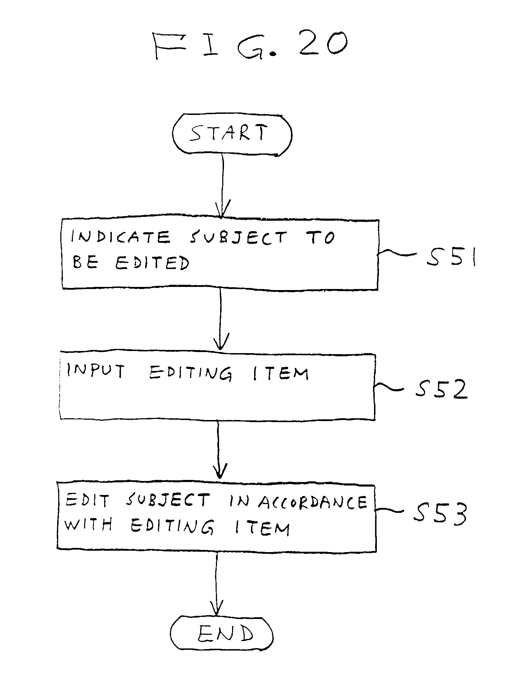

The PC client 10 executes an editing process in accordance with a segment of the control program. Fig. 20 is a flowchart of the program segment for the editing process. As shown in Fig. 20, a first step S51 of the program segment indicates contents to be edited on a monitor display of the PC client 10. A step S52 following the step S51 accepts a signal representative of an input editing item. A step S53 subsequent to the step S52 edits the subject contents in accordance with the input editing item. Thus, the step S53 generates editing-resultant data. After the step S53, the current execution cycle of the program segment ends. The editing-resultant data generated by the step S53 will be transmitted to the customer's player 6a.

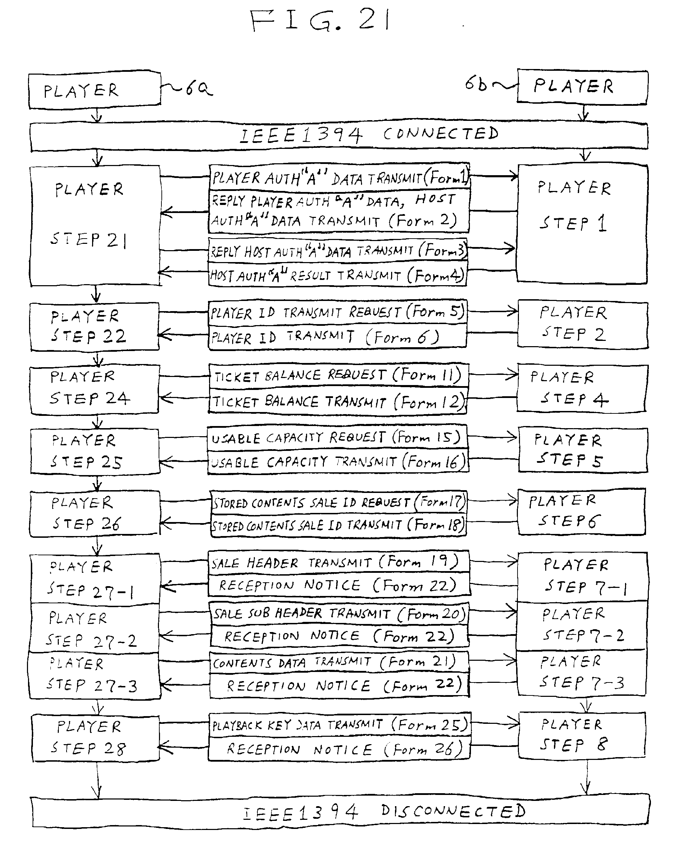

Fig. 21 shows a sequence of communications (data transfer) between the customer's players 6a and 6b. In Fig. 21, "Form 1", "Form 2", denote forms of transmitted signals respectively.

With reference to Fig. 21, in the case where the customer's player 6b is connected with the customer's player 6a via the IEEE1394 interface, the encrypting and decrypting section 6a-6 in the customer's player 6a generates original random-number authentication data D1. The random-number authentication data D1 1 have, for example, 8 bytes. The encrypting and decrypting section 6a-6 encrypts the random-number authentication data Dl into player authentication "A" data in response to a common key data piece K1 according to DES. The common key data piece K1 is selected from among common key data pieces K1-K6 which are held in common by the kiosk terminal apparatus 5, the players 6a and 6b, the settlement box 7, the web server 9, and the PC client 10. The player authentication "A" data are made into a form "1" having 8 bytes. The communication interface 6a-1 in the customer's player 6a transmits the player authentication "A" data of the form "1" to the customer's player 6b.

An inner portion of the customer's player 6b receives the player authentication "A" data via a communication interface of the customer's player 6b. An encrypting and decrypting section in the customer's player 6b decrypts the player authentication "A" data into the random-number authentication data D1 in response to the common key data piece K1 according to DES. The encrypting and decrypting section encrypts the random-number authentication data D 1 into reply player authentication "A" data in response to another common key data piece K2 according to DES. In addition, the encrypting and decrypting section generates original random-number authentication data D2. The random-number authentication data D2 have, for example, 8 bytes. The encrypting and decrypting section encrypts the random-number authentication data D2 into host authentication "A" data in response to still another common key data piece K3 according to DES. The reply player authentication "A" data and the host authentication "A" data are made into a form "2". The customer's player 6b transmits the reply player authentication "A" data and the host authentication "A" data of the form "2" to the customer's player 6a.

The inner portion of the customer's player 6a receives the reply player authentication "A" data and the host authentication "A" data via the communication interface 6a-1. The encrypting and decrypting section 6a-6 in the customer's player 6a decrypts the reply player authentication "A" data into the random-number authentication data Dl in response to the common key data piece K2 according to DES. The controller 6a-10 in the customer's player 6a collates the decryption-resultant random-number authentication data D1 with the original random-number authentication data D1.

In the case where the controller 6a-10 in the customer's player 6a decides that the decryption-resultant random-number authentication data D1 are different from the original random-number authentication data D1, the customer's player 6a repeats the previously-mentioned steps at most twice. If the decryption-resultant random-number authentication data D1 still remain different from the original random-number authentication data D1, the signal processing by the customer's player 6a is suspended.

In the case where the controller 6a-10 in the customer's player 6a decides that the decryption-resultant random-number authentication data D1 are equal to the original random-number authentication data D1, the encrypting and decrypting section 6a-6 in the customer's player 6a decrypts the host authentication "A" data into the random-number authentication data D2 in response to the common key data piece K3 according to DES. The encrypting and decrypting section 6a-6 encrypts the random-number authentication data D2 into reply host authentication "A" data in response to another common key data piece K4 according to DES. The reply host authentication "A" data are made into a form "3". The customer's player 6a transmits the reply host authentication "A" data of the form "3" to the customer's player 6b.

The encrypting and decrypting section in the customer's player 6b decrypts the reply host authentication "A" data into the random-number authentication data D2 in response to the common key data piece K4 according to DES. A controller in the customer's player 6b collates the decryption-resultant random-number authentication data D2 with the original random-number authentication data D2.

In the case where the controller in the customer's player 6b decides that the decryption-resultant random-number authentication data D2 are equal to the original random-number authentication data D2, the customer's player 6b transmits a form-"4" signal of the positive result of host authentication "A" to the customer's player 6a. Thereafter, the customer's player 6b executes later steps.

In the case where the controller in the customer's player 6b decides that the decryption-resultant random-number authentication data D2 are different from the original random-number authentication data D2, the customer's player 6b transmits a form-"4" signal of the negative result of host authentication "A" to the customer's player 6a. Thereafter, the customer's player 6b is inhibited from executing later steps.

Subsequently, the customer's player 6a transmits a form-"5" signal of a player ID transmission request to the customer's player 6b. In the customer's player 6b, the encrypting and decrypting section uses the random-number authentication data D2 as a key and encrypts the ID of the player 6b into the encryption-resultant player ID in response to the key according to DES on a 16-byte by 16-byte processing basis. The customer's player 6b transmits a form-"6" signal of its own encryption-resultant player ID to the customer's player 6a.

In the customer's player 6a, the encrypting and decrypting section 6a-6 uses the random-number authentication data D2 as a key and decrypts the encryption-resultant player ID into the original player ID in response to the key according to DES on a 16-byte by 16-byte processing basis. In the customer's player 6a, a signal representative of the decryption-resultant player ID is stored in the memory 6m.

In the case where the customer's player 6a fails to receive a form-"6" signal of an encryption-resultant player ID from the customer's player 6b, the customer's player 6a transmits a form-"5" signal of a player ID transmission request to the customer's player 6b again. If the customer's player 6a still does not receive a form-"6" signal of an encryption-resultant player ID, the customer's player 6a suspends processing operation with respect to the customer's player 6b.

Then, the customer's player 6a transmits a form-"11" signal of a ticket balance transmission request to the customer's player 6b. In response to the signal of the ticket balance transmission request, the controller in the customer's player 6b refers to the ticket balance at an electronic purse provided in a memory within the customer's player 6b. The encrypting and decrypting section in the customer's player 6b uses the random-number authentication data D2 as a key and encrypts the ticket balance in response to the key according to DES on a 16-byte by 16-byte processing basis. The customer's player 6b transmits a form-" 12" signal of the encryption-resultant ticket balance to the customer's player 6a. In the customer's player 6a, the encrypting and decrypting section 6a-6 uses the random-number authentication data D2 as a key and decrypts the encryption-resultant ticket balance into the original ticket balance in response to the key according to DES on a 16-byte by 16-byte processing basis. The controller 6a-10 in the customer's player 6a stores a signal of the original ticket balance into the internal memory 6m. When the original ticket balance means zero, the customer's player 6a suspends processing operation.

In the case where the customer's player 6a fails to receive a form-" 12" signal of an encryption-resultant ticket balance from the customer's player 6b, the customer's player 6a transmits a form-"11" signal of a ticket balance transmission request to the customer's player 6b again. If the customer's player 6a still does not receive a form-" 12" signal of an encryption-resultant ticket balance, the customer's player 6a suspends processing operation with respect to the customer's player 6b.

When the original ticket balance differs from zero, the customer's player 6a transmits a form-" 15" signal of a usable-memory-capacity transmission request (an unoccupied-memory-capacity transmission request) to the customer's player 6b. In response to the signal of the usable-memory-capacity transmission request, the controller in the customer's player 6b refers to a portion of data in a memory which represents a header/contents usable capacity. Thereby, the controller detects a usable memory capacity (an unoccupied memory capacity). The customer's player 6b transmits a form-"16" signal of the usable memory capacity to the customer's player 6a. In the customer's player 6a, the controller 6a-10 stores information of the usable memory capacity in the internal memory 6m.

In the case where the customer's player 6a fails to receive a form-" 16" signal of a usable memory capacity from the customer's player 6b, the customer's player 6a transmits a form-" 15" signal of a usable-memory-capacity transmission request to the customer's player 6b again. If the customer's player 6a still does not receive a form-" 16" signal of a usable memory capacity, the customer's player 6a suspends processing operation with respect to the customer's player 6b.

Subsequently, the customer's player 6a transmits a form-" 17" signal of a stored contents sale ID transmission request to the customer's player 6b. In response to the signal of the stored contents sale ID transmission request, the customer's player 6b operates as follows. When stored contents sale ID information is in the memory in the customer's player 6b, the encrypting and decrypting section uses the random-number authentication data D2 as a key and encrypts all pieces of the contents sale ID information in response to the key according to DES on a 16-byte by 16-byte processing basis. Then, the customer's player 6b transmits a form-"18" signal of the encryption-resultant stored contents sale ID information to the customer's player 6a. When stored contents sale ID information is absent from the memory in the customer's player 6b, the customer's player 6b transmits a form-" 18" signal of the absence of stored contents sale ID information to the customer's player 6a.

In the customer's player 6a, the encrypting and decrypting section 6a-6 uses the random-number authentication data D2 as a key and decrypts the encryption-resultant stored contents sale ID information into the original stored contents sale ID information in response to the key according to DES on a 16-byte by 16-byte processing basis. The controller 6a-10 collates the original stored contents sale ID information with transferred contents sale ID information in the memory 6a-5. In the presence of equal ID's in the stored contents sale ID information and the transferred contents sale ID information, the customer's player 6a suspends processing operation. In the absence of equal ID's from the stored contents sale ID information and the transferred contents sale ID information, the controller 6a-10 reads the transfer generation number (the copy generation number) represented by the transfer control data in the sale header related to the transferred contents. When the transfer generation number is "0000" (prohibition on copying), the controller 6a-10 actuates the display 6a-3 to indicate prohibition on copying. In this case, the customer's player 6b does not receive any data from the customer's player 6a for a predetermined time, and a display of the customer's player 6b is controlled to indicate prohibition on copying. When the transfer generation number is "0001" or greater, the controller 6a-10 decrements the transfer generation number by "1". Then, the encrypting and decrypting section 6a-6 uses the random-number authentication data D 1 as a key and encrypts the sale header of the transferred contents except the playback key data in response to the key according to DES.

Then, the customer's player 6a transmits the encryption-resultant sale header of a form "19" to the customer's player 6b. In the customer's player 6b, the encrypting and decrypting section uses the random-number authentication data D 1 as a key and decrypts the encryption-resultant sale header in response to the key according to DES. A signal representative of the decryption-resultant sale header is stored in the memory within the customer's player 6b. The customer's player 6b transmits a form-"22" signal of a data reception notice to the customer's player 6a when successfully receiving the encryption-resultant sale header.

In the customer's player 6a, when a signal representing a sale sub header exists in the memory 6a-5, the controller 6a-10 transmits the signal of the sale sub header from the memory 6a-5 to the encrypting and decrypting section 6a-6. The encrypting and decrypting section 6a-6 uses the random-number authentication data D1 as a key and encrypts the sale sub header in response to the key according to DES. The customer's player 6a transmits the encryption-resultant sale sub header of a form "20" to the customer's player 6b.

In the customer's player 6b, the encrypting and decrypting section uses the random-number authentication data D 1 as a key and decrypts the encryption-resultant sale sub header in response to the key according to DES. A signal representative of the decryption-resultant sale sub header is stored in the memory within the customer's player 6b. The customer's player 6b transmits a form-"22" signal of a data reception notice to the customer's player 6a when successfully receiving the encryption-resultant sale sub header.

Then, the customer's player 6a transmits contents data (encryption-resultant contents data) of a form "21" to the customer's player 6b. In the customer's player 6b, the contents data are stored in the memory. The customer's player 6b transmits a form-"22" signal of a data reception notice to the customer's player 6a when successfully receiving the contents data.

Subsequently, in the customer's player 6a, the secondary encryption-resultant playback key data, which are in the sale header represented by information in the memory 6a-5, are transmitted to the encrypting and decrypting section 6a-6. The encrypting and decrypting section 6a-6 decrypts the secondary encryption-resultant playback key data into the primary encryption-resultant playback key data in response to the ID of the player 6a according to DES. Then, the encrypting and decrypting section 6a-6 encrypts the primary encryption-resultant playback key data into other secondary encryption-resultant playback key data (third encryption-resultant playback key data) in response to the ID of the player 6b according to DES. The customer's player 6a transmits the secondary encryption-resultant playback key data (the third encryption-resultant playback key data) of a form "25" to the customer's player 6b.

In the customer's player 6b, the secondary encryption-resultant playback key data (the third encryption-resultant playback key data) are placed in the corresponding area of the sale header represented by information in the memory. The controller reduces the electronic money (the ticket balance) in the electronic purse by an amount corresponding to the sale ticket number or an amount corresponding the price of the contents data. The controller stores information of a received contents transfer history (a received contents copy history) into the internal memory. Then, the customer's player 6b transmits a form-"26" signal of a data reception notice to the customer's player 6a which indicates successful reception of the secondary encryption-resultant playback key data (the third encryption-resultant playback key data). Thereafter, the customer's player 6b is disconnected from the customer's player 6a. In other words, the IEEE1394 interface between the customer's players 6a and 6b is disconnected.

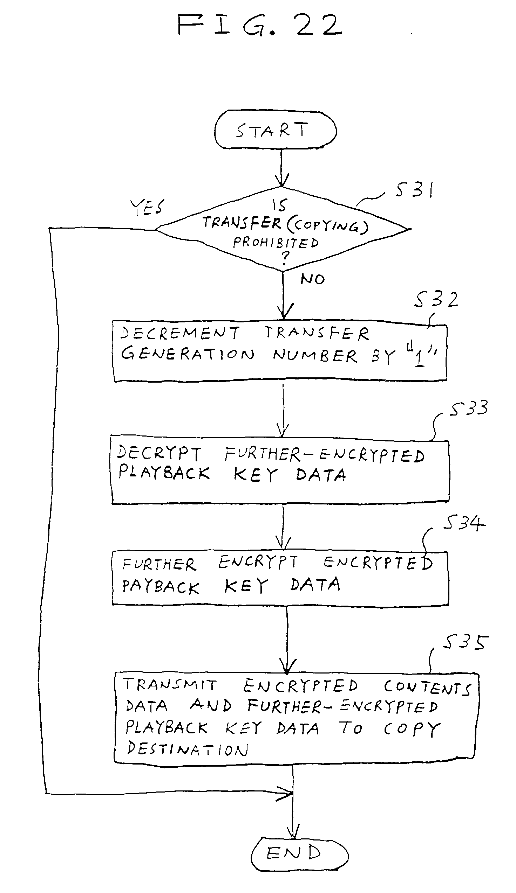

Fig. 22 is a flowchart of a segment of the control program for the computer in the customer's player 6a. The program segment in Fig. 22 relates to transferring or copying data from the customer's player 6a to the customer's player 6b.

As shown in Fig. 22, a first step S31 of the program segment refers to transfer control data in every sale header. The step S31 decides whether the transfer control data represent prohibition or permission concerning data transfer (copying). When the transfer control data represent prohibition, the program exits from the step S31 and then the current execution cycle of the program segment ends. On the other hand, when the transfer control data represent permission, the program advances from the step S31 to a step S32.

The step S32 decrements a transfer generation number (a copy generation number) represented by the transfer control data. The decrement corresponds to a number reduction of "1".

A step S33 following the step S32 decrypts the secondary encryption-resultant playback key data (transmitted from, for example, the kiosk terminal apparatus 5) into the primary encryption-resultant playback key data in response to the ID of the customer's player 6a according to DES for every sale header.

A step S34 subsequent to the step S33 encrypts the primary encryption-resultant playback key data into other secondary encryption-resultant playback key data or third encryption-resultant playback key data in response to the ID of the copy-destination player (the transfer-destination player) 6b.

A step S35 following the step S34 transmits the encryption-resultant contents data and the secondary encryption-resultant playback key data (generated by the step S34) to the copy-destination player 6b. The customer's player 6b recovers the original contents data as the customer's player 6a does. After the step S35, the current execution cycle of the program segment ends.

The forms of signals transmitted between the kiosk terminal apparatus 5 and the customer's player 6a, and the forms of signals transmitted among the web server 9, the PC client 10, and the customer's player 6a, and the forms of signals transmitted between the customer's players 6a and 6b are of first and second types corresponding to first and second basic formats respectively.

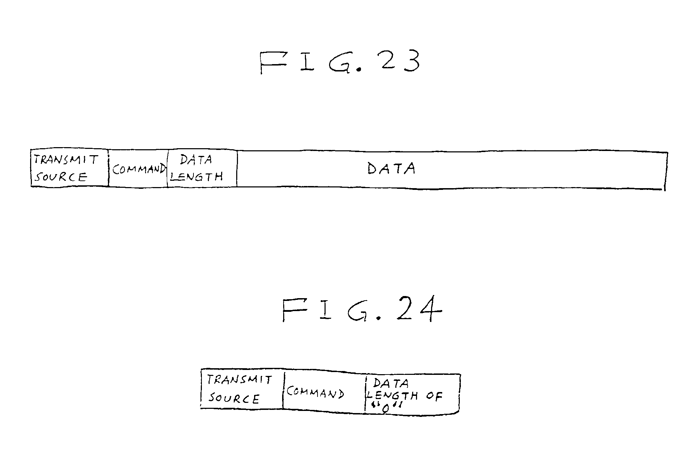

Fig. 23 shows the first basic format of transmitted signals. As shown in Fig. 23, a signal of the first basic format has a sequence of a code word (an ID code word) representing a transmission source, a code word representing a command, and an information piece representing the length of data (encryption-resultant data). The data-length information piece is followed by the data (the encryption-resultant data). The ID code word is added to the transmitted signal by the transmission source. The first basic format is used for data-added transmitted signals.

Fig. 24 shows the second basic format of transmitted signals. As shown in Fig. 24, a signal of the second basic format has a sequence of a code word (an ID code word) representing a transmission source, a code word representing a command, and an information piece representing a data length of "0". The ID code word is added to the transmitted signal by the transmission source. The second basic format is used for data-less transmitted signals such as transmitted signals representing requests or notices.

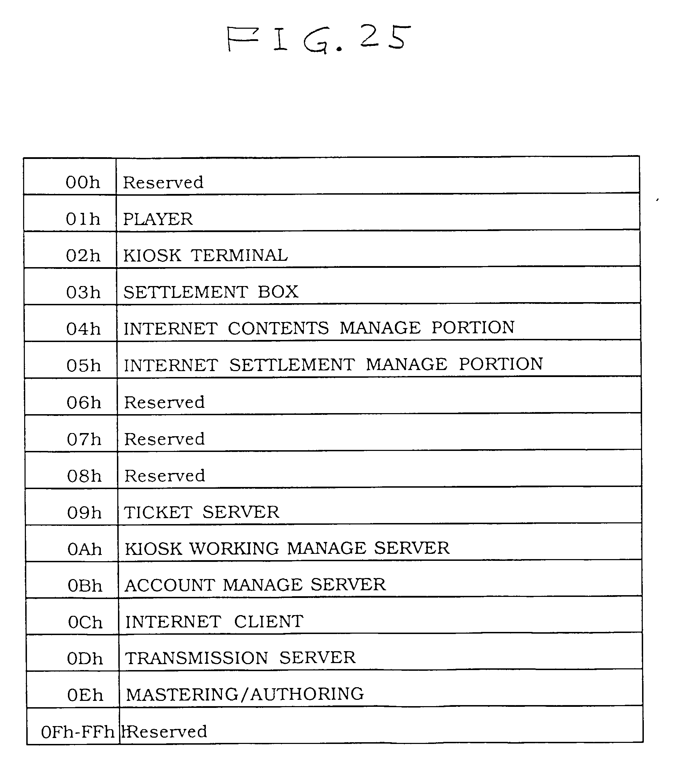

Fig. 25 shows a list of code words (ID code words) representing transmission sources. As shown in Fig. 25, a code word "00h" is reserved. A code word "01h" is assigned to a customer's player 6a. A code word "02h" is assigned to a kiosk terminal apparatus 5. A code word "03h" is assigned to a settlement box 7. A code word "04h" is assigned to an Internet contents management portion. A code word "05h" is assigned to an Internet settlement management portion. Code words "06h", "07h", and "08h" are reserved. A code word "09h" is assigned to a ticket server. A code word "0Ah" is assigned to a kiosk working management server. A code word "0Bh" is assigned to an account management server 8. A code word "0Ch" is assigned to an Internet PC client 10. A code word "0Dh" is assigned to a transmission server 2. A code word "0Eh" is assigned to an authoring system unit 1. Code words "0Fh" to "FFh" are reserved.

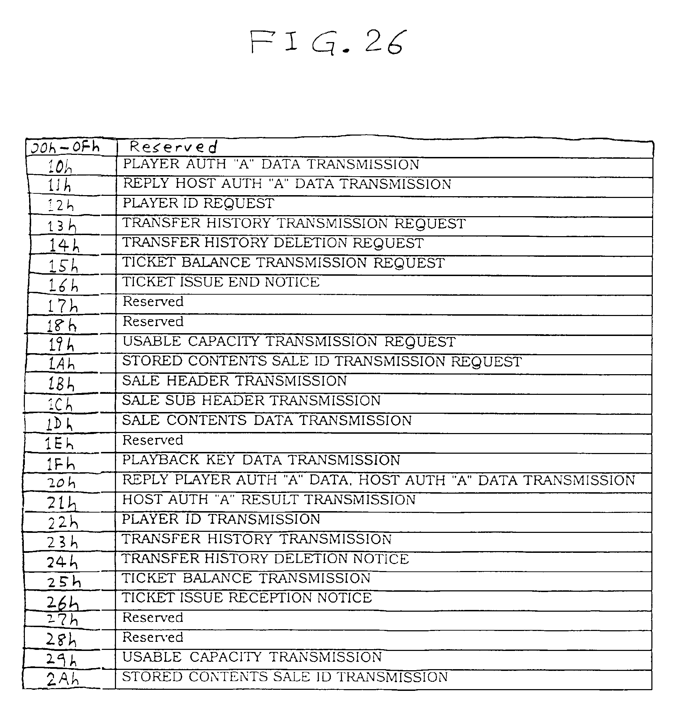

Fig. 26 shows a first list of code words representing commands (or transmitted-signal types) including requests, notices, and others. As shown in Fig. 26, code words "00h" to "0Fh" are reserved. A code word "10h" is assigned to player authentication "A" data transmission. A code word "11h" is assigned to reply host authentication "A" data transmission. A code word "12h" is assigned to a player ID transmission request. A code word "13h" is assigned to a transfer history transmission request. A code word "14h" is assigned to a transfer history deletion request. A code word "15h" is assigned to a ticket balance transmission request. A code word "16h" is assigned to a ticket issue end notice. Code words "17h" and "18h" are reserved. A code word "19h" is assigned to a usable-memory-capacity transmission request. A code word "1Ah" is assigned to a stored contents sale ID transmission request. A code word "1Bh" is assigned to sale header transmission. A code word "1Ch" is assigned to sale sub header transmission. A code word "1Dh" is assigned to sale contents data transmission. A code words "1Eh" is reserved. A code word "1Fh" is assigned to playback key data transmission. A code word "20h" is assigned to reply player authentication "A" data and host authentication "A" data transmission. A code word "21h" is assigned to host authentication "A" result transmission. A code word "22h" is assigned to player ID transmission. A code word "23h" is assigned to transfer history transmission. A code word "24h" is assigned to a transfer history deletion notice. A code word "25h" is assigned to ticket balance transmission. A code word "26h" is assigned to a ticket issue reception notice. Code words "27h" and "28h" are reserved. A code word "29h" is assigned to usable-memory-capacity transmission. A code word "2Ah" is assigned to stored contents sale ID transmission.

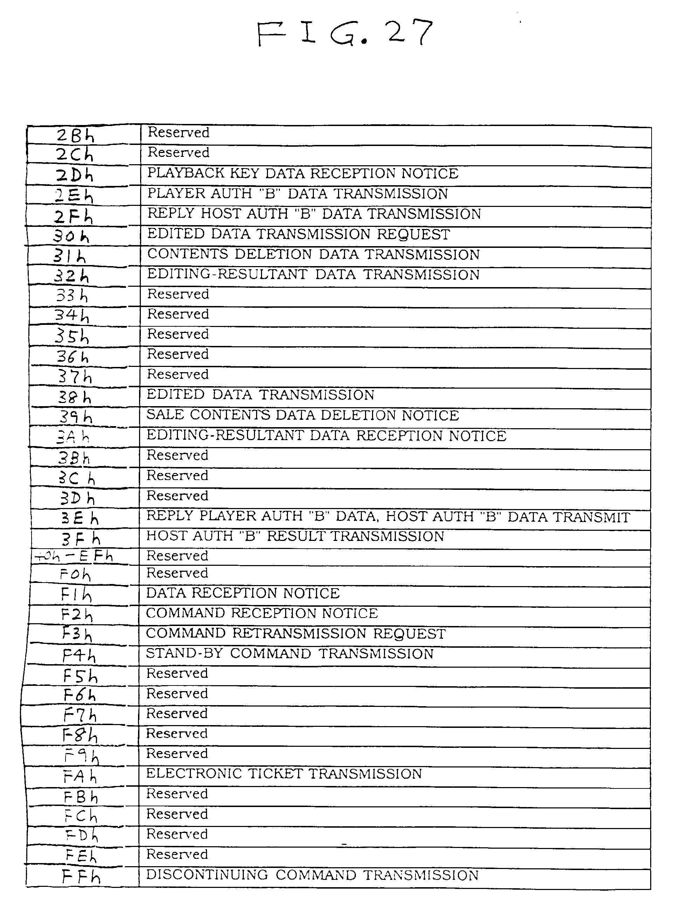

Fig. 27 shows a second list of code words representing commands (or transmitted-signal types) including requests, notices, and others. As shown in Fig. 27, code words "2Bh" and "2Ch" are reserved. A code word "2Dh" is assigned to a playback key data reception notice. A code word "2Eh" is assigned to player authentication "B" data transmission. A code word "2Fh" is assigned to reply host authentication "B" data transmission. A code word "30h" is assigned to an edited data transmission request. A code word "31h" is assigned to contents deletion data transmission. A code word "32h" is assigned to editing-resultant data transmission. Code words "33h", "34h", "35h", "36h", and "37h" are reserved. A code word "38h" is assigned to edited data transmission. A code word "39h" is assigned to a sale contents data deletion notice. A code word "3Ah" is assigned to an editing-resultant data reception notice. Code words "3Bh", "3Ch", and "3Dh" are reserved. A code word "3Eh" is assigned to reply player authentication "B" data and host authentication "B" data transmission. A code word "3Fh" is assigned to host authentication "B" result transmission. Code words "40h" to "EFh" are reserved. A code word "F0h" is reserved. A code word "F1h" is assigned to a data reception notice. A code word "F2h" is assigned to a command reception notice. A code word "F3h" is assigned to a command retransmission request. A code word "F4h" is assigned to stand-by command transmission. Code words "F5h", "F6h", "F7h", "F8h", and "F9h" are reserved. A code word "FAh" is assigned to electronic ticket transmission. Code words "FBh", "FCh", "FDh", and "FEh" are reserved. A code word "FFh" is assigned to discontinuing command transmission.

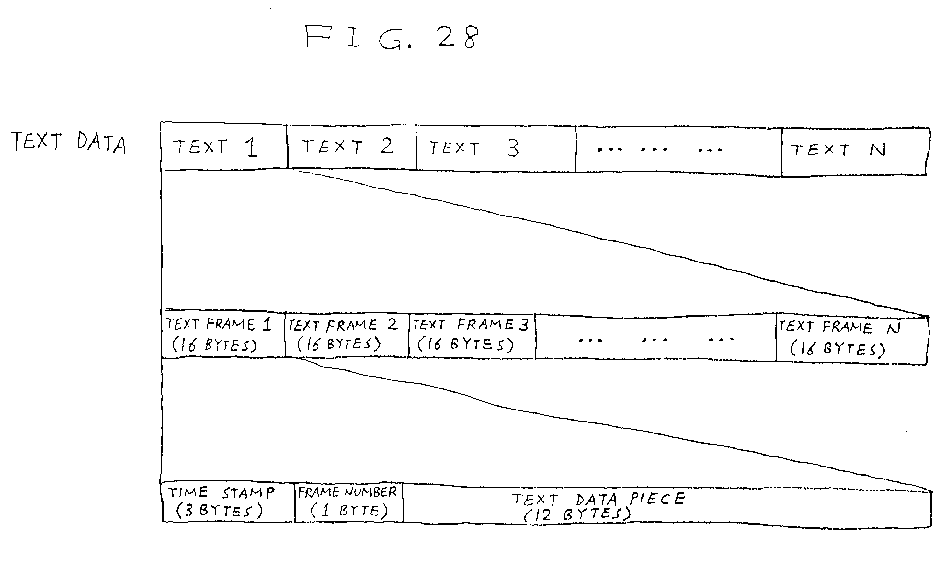

Text data is of a given format mentioned hereinafter. As shown in Fig. 28, text data of the given format is divided into segments (1-text-corresponding segments) corresponding to texts "1", "2", "3", ···, and "N" respectively. Here, "N" denotes a predetermined natural number. Every 1-text-corresponding segment is composed of N successive text frames each having 16 bytes. Each text frame has a sequence of 3 bytes representing a time stamp, 1 byte representing a frame number, and 12 bytes representing a portion of actual text data.

Exclusive-OR operation between text data and playback key data 16-byte by 16-byte (frame-by-frame) encrypts the text data. Exclusive-OR operation between encryption-resultant text data and playback key data 16-byte by 16-byte decrypts the encryption-resultant text data.

It should be noted that to update contents data (encryption-resultant contents data) stored in the kiosk terminal apparatus 5, the apparatus 5 may be periodically replaced with a new one.

Application software for the kiosk terminal apparatus 5 can be transmitted thereto from the uplink center 3 via the satellite 4. Application software for the PC client 10 can be transmitted thereto from the web server 9.

Communications between the settlement box 7 and the customer's player 6a are basically similar to those between the kiosk terminal apparatus 5 and the customer's player 6a. During the communications between the settlement box 7 and the customer's player 6a, the previously-mentioned electronic ticket is issued.

### Second Embodiment

A second embodiment of this invention is similar to the first embodiment (see Figs. 1-28) thereof except for design changes mentioned hereinafter.

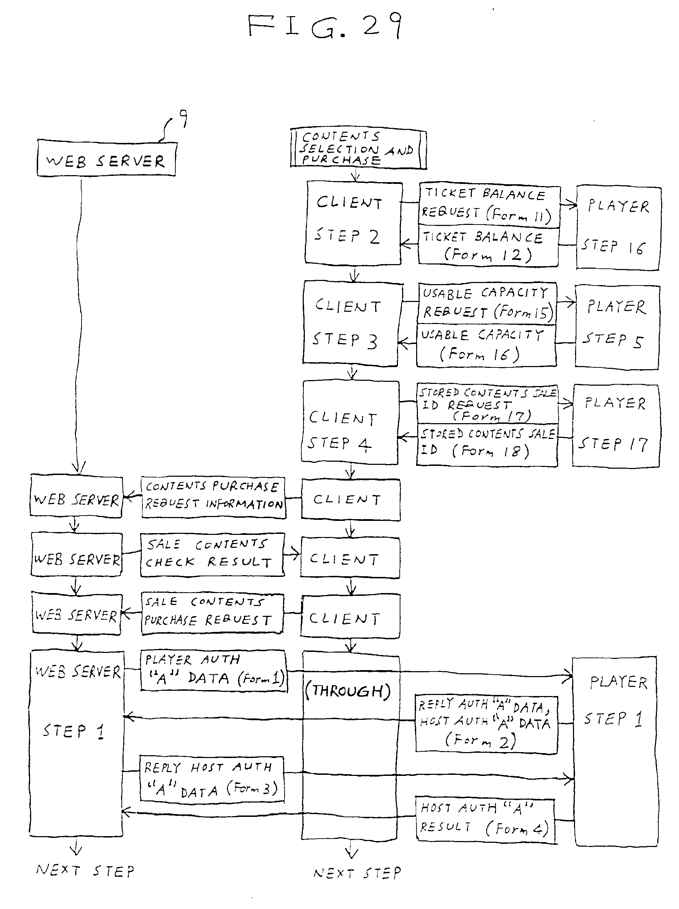

Figs. 29, 30, and 31 show a sequence of communications among a web server 9, a PC client 10, and a customer's player 6a during a contents selection and purchase stage according to the second embodiment of this invention. In Figs. 29, 30, and 31, "Form 11", "Form 12", ··· denote predetermined forms (formats) of transmitted signals respectively.

With reference to Fig. 29, during the contents selection and purchase stage, the PC client 10 transmits contents purchase request information to the web server 9. Next, the web server 9 transmits a signal of a sale contents check result to the PC client 10. Thereafter, the PC client 10 transmits a signal of a contents purchase request to the web server 9. The web server 9 transmits player authentication "A" data of a form "1" to the customer's player 6a through the PC client 10. In response to the player authentication "A" data, the customer's player 6a transmits reply player authentication "A" data and host authentication "A" data of a form "2" to the web server 9 through the PC client 10. Next, the web server 9 transmits reply host authentication "A" data of a form "3" to the customer's player 6a through the PC client 10. In response to the reply host authentication "A" data, the customer's player 6a transmits a form-"4" signal of the result of host authentication "A" to the web server 9 through the PC client 10.

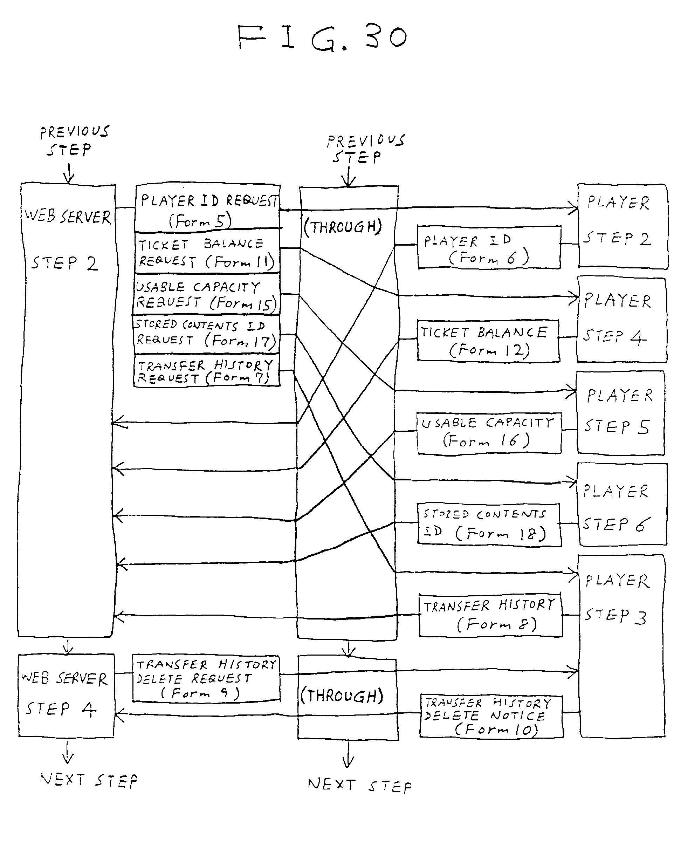

Subsequently, as shown in Fig. 30, the web server 9 transmits a form-"5" signal of a player ID transmission request, a form-" 11" signal of a ticket balance transmission request, a form-" 15" signal of a usable-memory-capacity transmission request (an unoccupied-memory-capacity transmission request), a form-" 17" signal of a stored contents sale ID transmission request, and a form-"7" signal of a transfer history transmission request (a copy history transmission request) to the customer's player 6a through the PC client 10. In response to the signal of the player ID transmission request, the customer's player 6a transmits a form-"6" signal of its own player ID to the web server 9 through the PC client 10. In response to the signal of the ticket balance transmission request, the customer's player 6a transmits a form-" 12" signal of a ticket balance to the web server 9 through the PC client 10. In response to the signal of the usable-memory-capacity transmission request, the customer's player 6a transmits a form-" 16" signal of a usable memory capacity (an unoccupied memory capacity) to the web server 9 through the PC client 10. In response to the signal of the stored contents sale ID transmission request, the customer's player 6a transmits a form-" 18" signal of a stored contents sale ID to the web server 9 through the PC client 10. In response to the signal of the transfer history transmission request, the customer's player 6a transmits a form-"8" signal of a transfer history (a copy history) to the web server 9 through the PC client 10.

Subsequently, the web server 9 transmits a form-"9" signal of a transfer history deletion request (a copy history deletion request) to the web server 9 through the PC client 10. In response to the signal of the transfer history deletion request, the customer's player 6a transmits a form-" 10" signal of a transfer history deletion notice (a copy history deletion notice) to the web server 9 through the PC client 10.

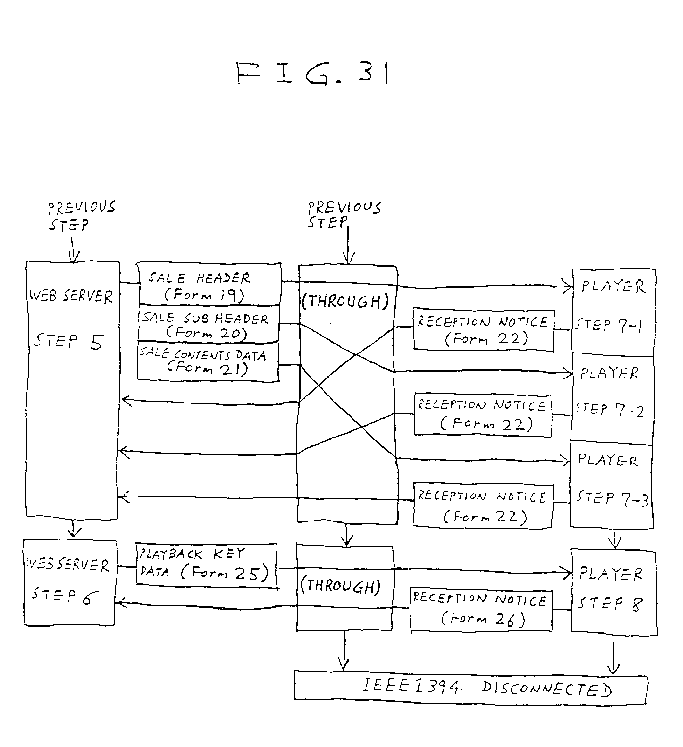

Next, as shown in Fig. 31, the web server 9 transmits a sale header of a form "19", a sale sub header of a form "20", and contents data (encryption-resultant contents data) of a form "21" to the customer's player 6a through the PC client 10. The customer's player 6a transmits a form-"22" signal of a data reception notice to the web server 9 through the PC client 10 when successfully receiving the sale header. The customer's player 6a transmits a form-"22" signal of a data reception notice to the web server 9 through the PC client 10 when successfully receiving the sale sub header. The customer's player 6a transmits a form-"22" signal of a data reception notice to the web server 9 through the PC client 10 when successfully receiving the contents data.

Subsequently, the web server 9 transmits playback key data (secondary encryption-resultant playback key data) of a form "25" to the customer's player 6a through the PC client 10. The customer's player 6a transmits a form-"26" signal of a data reception notice to the web server 9 through the PC client 10 when successfully receiving the playback key data (the secondary encryption-resultant playback key data). Thereafter, the customer's player 6a is disconnected from the PC client 10. In other words, the IEEE1394 interface between the PC client 10 and the customer's player 6a is disconnected.

### Third Embodiment

A third embodiment of this invention is similar to the first embodiment (see Figs. 1-28) thereof except for design changes mentioned hereinafter.

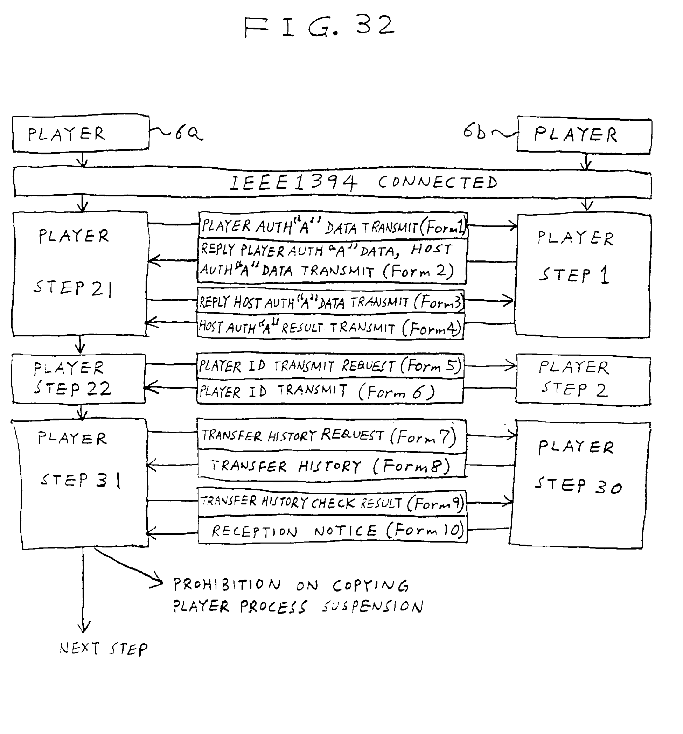

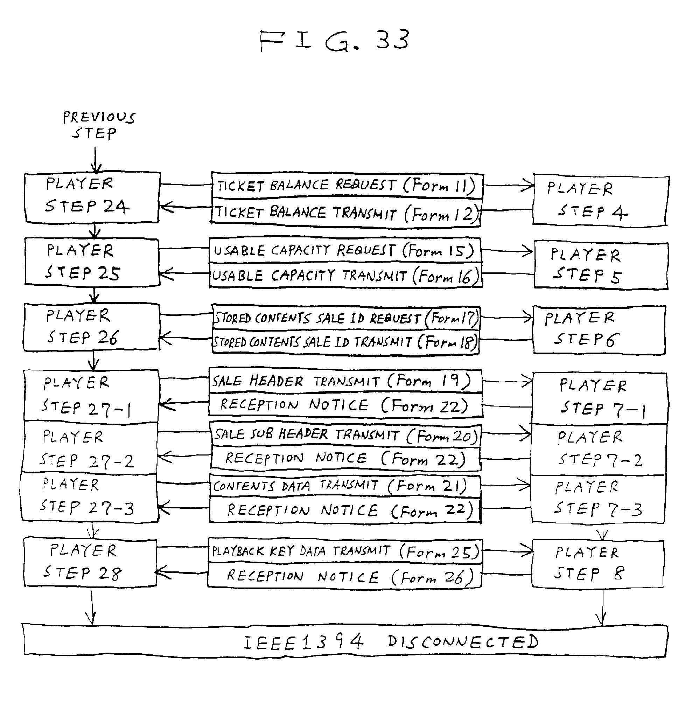

Figs. 32 and 33 show a sequence of communications between customer's players 6a and 6b according to the third embodiment of this invention. In Figs. 32 and 33, "Form 1", "Form 2", denote forms of transmitted signals respectively.

With reference to Fig. 32, after the customer's player 6b transmits a form-"6" signal of its own encryption-resultant player ID to the customer's player 6a, the customer's player 6a transmits a form-"7" signal of a transfer history transmission request (a copy history transmission request) to the customer's player 6b. In response to the signal of the transfer history transmission request, a controller in the customer's player 6b detects whether or not received transfer-history information (received copy-history information) exists in an internal memory.

In the case where received transfer-history information (received copy-history information) exists in the memory, an encrypting and decrypting section in the customer's player 6b uses random-number authentication data D2 as a key and encrypts all pieces of the received transfer-history information into an encryption-resultant transfer history (an encryption-resultant copy history) in response to the key according to DES in the sale contents reception order. The customer's player 6b transmits a form-"8" signal of the encryption-resultant transfer history to the customer's player 6a. In the customer's player 6a, an encrypting and decrypting section 6a-6 uses the random-number authentication data D2 as a key and decrypts the encryption-resultant transfer history into the original transfer history (the original copy history) in response to the key according to DES. A controller 6a-10 checks whether data copying (data transfer) is permitted or prohibited by referring to the original transfer history. Then, the customer's player 6a transmits a form-"9" signal of the result of the transfer history check to the customer's player 6b.

In the customer's player 6b, when the result of the transfer history check represents that data copying is prohibited, the controller actuates a display to indicate prohibition on data copying. When the result of the transfer history check represents that data copying is permitted, the controller increments all the numbers of times of history transfer by "1" and thereby updates history transfer information. The updating-resultant history transfer information is stored in the memory within the customer's player 6b. The customer's player 6b transmits a form-" 10" signal of a data reception notice to the customer's player 6a which represents successful reception of the signal of the transfer history check result.

In the case where the controller 6a-10 in the customer's player 6a decides that data copying (data transfer) is prohibited, the customer's player 6a suspends processing operation with respect to the customer's player 6b. On the other hand, in the case where the controller 6a-10 decides that data copying (data transfer) is permitted, operation of the customer's player 6a enters a contents transfer stage.

With reference to Fig. 33, during the contents transfer stage, the customer's player 6a transmits a form-"11" signal of a ticket balance transmission request to the customer's player 6b. In response to the signal of the ticket balance transmission request, the controller in the customer's player 6b refers to a ticket balance at an electronic purse. The encrypting and decrypting section in the customer's player 6b uses the random-number authentication data D2 as a key and encrypts the ticket balance in response to the key according to DES on a 16-byte by 16-byte processing basis. The customer's player 6b transmits a form-" 12" signal of the encryption-resultant ticket balance to the customer's player 6a. In the customer's player 6a, the encrypting and decrypting section 6a-6 uses the random-number authentication data D2 as a key and decrypts the encryption-resultant ticket balance into the original ticket balance in response to the key according to DES on a 16-byte by 16-byte processing basis. The controller 6a-10 in the customer's player 6a stores a signal of the original ticket balance into an internal memory 6m. When the original ticket balance means zero, the customer's player 6a suspends processing operation.

In the case where the customer's player 6a fails to receive a form-" 12" signal of an encryption-resultant ticket balance from the customer's player 6b, the customer's player 6a transmits a form-"11" signal of a ticket balance transmission request to the customer's player 6b again. If the customer's player 6a still does not receive a form-" 12" signal of an encryption-resultant ticket balance, the customer's player 6a suspends processing operation with respect to the customer's player 6b.

When the original ticket balance differs from zero, the customer's player 6a transmits a form-"15" signal of a usable-memory-capacity transmission request (an unoccupied-memory-capacity transmission request) to the customer's player 6b. In response to the signal of the usable-memory-capacity transmission request, the controller in the customer's player 6b refers to a portion of data in the memory which represents a header/contents usable capacity. Thereby, the controller detects a usable memory capacity (an unoccupied memory capacity). The customer's player 6b transmits a form-" 16" signal of the usable memory capacity to the customer's player 6a. In the customer's player 6a, the controller 6a-10 stores information of the usable memory capacity in the internal memory 6m.

In the case where the customer's player 6a fails to receive a form-" 16" signal of a usable memory capacity from the customer's player 6b, the customer's player 6a transmits a form-"15" signal of a usable-memory-capacity transmission request to the customer's player 6b again. If the customer's player 6a still does not receive a form-" 16" signal of a usable memory capacity, the customer's player 6a suspends processing operation with respect to the customer's player 6b.

Subsequently, the customer's player 6a transmits a form-" 17" signal of a stored contents sale ID transmission request to the customer's player 6b. In response to the signal of the stored contents sale ID transmission request, the customer's player 6b operates as follows. When stored contents sale ID information is in the memory within the customer's player 6b, the encrypting and decrypting section uses the random-number authentication data D2 as a key and encrypts all pieces of the contents sale ID information in response to the key according to DES on a 16-byte by 16-byte processing basis. Then, the customer's player 6b transmits a form-"18" signal of the encryption-resultant stored contents sale ID information to the customer's player 6a. When stored contents sale ID information is absent from the memory within the customer's player 6b, the customer's player 6b transmits a form-" 18" signal of the absence of stored contents sale ID information to the customer's player 6a.

Then, the customer's player 6a transmits an encryption-resultant sale header of a form "19" to the customer's player 6b. The customer's player 6b transmits a form-"22" signal of a data reception notice to the customer's player 6a when successfully receiving the encryption-resultant sale header. The customer's player 6a transmits an encryption-resultant sale sub header of a form "20" to the customer's player 6b. The customer's player 6b transmits a form-"22" signal of a data reception notice to the customer's player 6a when successfully receiving the encryption-resultant sale sub header. The customer's player 6a transmits contents data (encryption-resultant contents data) of a form "21" to the customer's player 6b. The customer's player 6b transmits a form-"22" signal of a data reception notice to the customer's player 6a when successfully receiving the contents data.

Subsequently, in the customer's player 6a, secondary encryption-resultant playback key data, which are in the sale header represented by information in a memory 6a-5, are transmitted to the encrypting and decrypting section 6a-6. The encrypting and decrypting section 6a-6 decrypts the secondary encryption-resultant playback key data into the primary encryption-resultant playback key data in response to the ID of the player 6a according to DES. Then, the encrypting and decrypting section 6a-6 encrypts the primary encryption-resultant playback key data into other secondary encryption-resultant playback key data (third encryption-resultant playback key data) in response to the ID of the player 6b according to DES. The customer's player 6a transmits the secondary encryption-resultant playback key data (the third encryption-resultant playback key data) of a form "25" to the customer's player 6b.

In the customer's player 6b, the secondary encryption-resultant playback key data (the third encryption-resultant playback key data) are placed in the corresponding area of the sale header represented by information in the memory. The controller reduces the electronic money (the ticket balance) in the electronic purse by an amount corresponding to the sale ticket number or an amount corresponding to the price of the contents data. The controller stores information of a received contents transfer history (a received contents copy history) into the internal memory. Then, the customer's player 6b transmits a form-"26" signal of a data reception notice to the customer's player 6a which indicates successful reception of the secondary encryption-resultant playback key data (the third encryption-resultant playback key data). Thereafter, the customer's player 6b is disconnected from the customer's player 6a. In other words, the IEEE1394 interface between the customer's players 6a and 6b is disconnected.

### Fourth Embodiment

A fourth embodiment of this invention is similar to the first embodiment (see Figs. 1-28) thereof except for design changes mentioned hereinafter.

In the fourth embodiment of this invention, a memory 6a-5 in a customer's player 6a is formed by a recording medium such as a memory device which is detachably mounted on a main body of the customer's player 6a. A predetermined ID (a predetermined identification code word) is assigned to the memory 6a-5. A signal representing the memory ID is stored in the memory 6a-5. Playback key data are encrypted and decrypted in response to the memory ID. The memory ID is a second example of data peculiar to the customer's player 6a.

A player 6b is similar in structure to the player 6a. Encryption-resultant contents data may be stored in a first given area of a detachable memory in the player 6b. In addition, encryption-resultant header information may be stored in a second given area of the detachable memory in the player 6b.

A memory 6a-2 which stores a signal representing an electronic purse is a detachably-mounted IC memory card such as a debit card or an IC card exclusively for a data center or a web server 9.

### Fifth Embodiment

A fifth embodiment of this invention is similar to one of the first, second, third, and fourth embodiments thereof except for design changes mentioned hereinafter.

During a contents transfer stage in a sequence of communications between a kiosk terminal apparatus 5 and a customer's player 6a, the kiosk terminal apparatus 5 transmits contents data (encryption-resultant contents data) of a form "21" to the customer's player 6a. The kiosk terminal apparatus 5 adds at least one of sale promotion data and advertisement data to the contents data transmitted to the customer's player 6a. Thus, the sale promotion data and the advertisement data can be delivered to the customer's player 6a free of charge. The sale promotion data or the advertisement data represent, for example, a music hit chart.

During a contents selection and purchase stage in a sequence of communications among a web server 9, a PC client 10, and the customer's player 6a, the web server 9 transmits contents data (encryption-resultant contents data) of a form "21" to the PC client 10. The PC client 10 transmits the contents data (the encryption-resultant contents data) to the customer's player 6a. The web server 9 may transmit contents data (encryption-resultant contents data) of a form "21" to the customer's player 6a through the PC client 10. The web server 9 adds at least one of sale promotion data and advertisement data to the contents data transmitted to the customer's player 6a. Thus, the sale promotion data and the advertisement data can be delivered to the customer's player 6a free of charge. The sale promotion data or the advertisement data represent, for example, a music hit chart.

### Sixth Embodiment

A sixth embodiment of this invention is similar to one of the first, second, third, fourth, and fifth embodiments thereof except for design changes mentioned hereinafter.

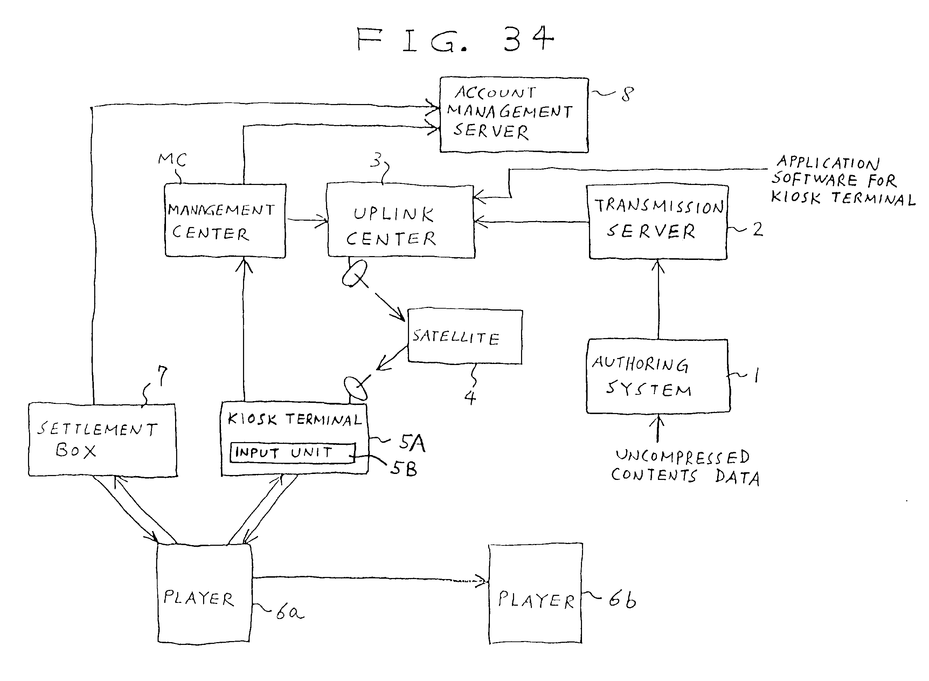

As shown in Fig. 34, the sixth embodiment of this invention includes a kiosk terminal apparatus 5A instead of the kiosk terminal apparatus 5 (see Fig. 1). The kiosk terminal apparatus 5A is provided with an input unit 5B. The input unit 5B includes a barcode reader, an input tablet, a pen-based input device, a touch screen input device, or a POS-based input device.

The barcode reader is used as follows. When operation of the kiosk terminal apparatus 5A moves to steps for a sale, the barcode reader scans a contents indication card to read out information therefrom and to accept an order for desired contents. The kiosk terminal apparatus 5A feeds a customer's player 6a with contents data corresponding to the ordered contents.

The pen-based input device is used as follows. When operation of the kiosk terminal apparatus 5A moves to steps for a sale, a pen of the pen-based input device reads out information from a contents indication panel of the pen-based input device to accept an order for desired contents. The kiosk terminal apparatus 5A feeds the customer's player 6a with contents data corresponding to the ordered contents.

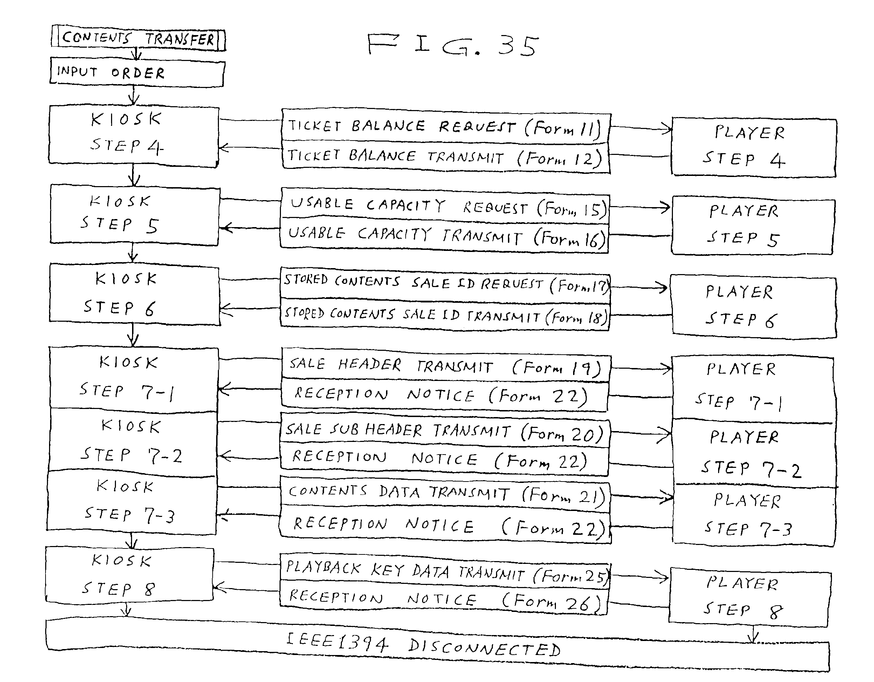

With reference to Fig. 35, during a contents transfer stage in a sequence of communication between the kiosk terminal apparatus 5A and the customer's player 6a, the kiosk terminal apparatus 5A executes a step of inputting or accepting an order for desired contents before the transmission of a form-" 11" signal of a ticket balance transmission request to the customer's player 6a. The order inputting step uses the input unit 5B.

### Seventh Embodiment

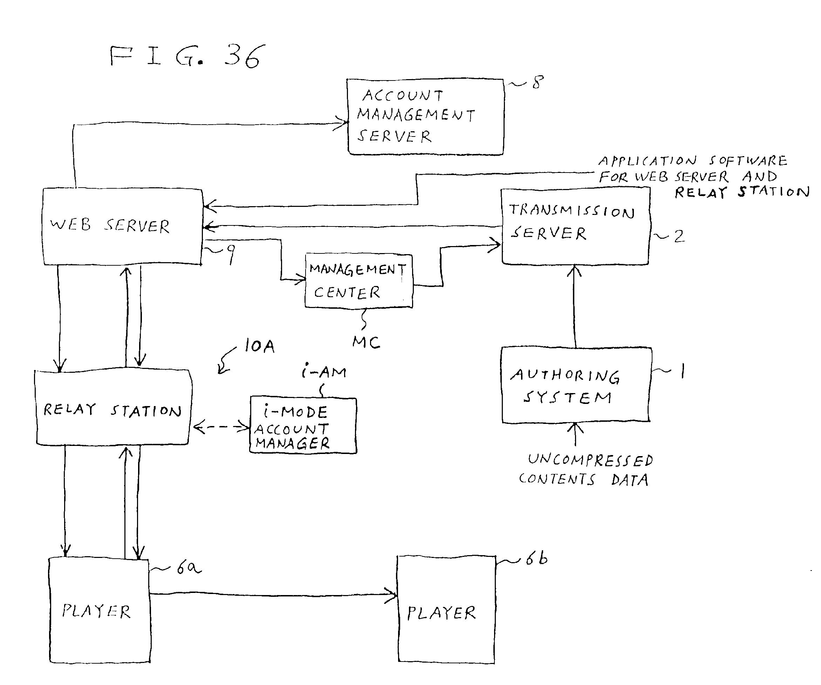

Fig. 36 shows a contents sale system according to a seventh embodiment of this invention. The contents sale system in Fig. 36 is similar to the contents sale system in Fig. 2 except for design changes mentioned hereinafter. It should be noted that the contents sale system in Fig. 1 and the contents sale system in Fig. 36 may be combined into a versatile contents sale system.

The contents sale system in Fig. 36 includes an i-mode mobile telephone relay station 10A instead of the PC client 10 (see Fig. 2). Here, "i-mode" means a contents-information transmission service provided by a mobile telecommunication company to users of mobile telecommunication terminals via the Internet. The relay station 10A is provided with an i-mode account manager i-AM. The account manager i-AM executes account management similar to that carried out by an account management server 8.

The contents sale system in Fig. 36 also includes a management center MC connected between a transmission server 2 and a web server 9. In the contents sale system of Fig. 36, a customer's player 6a includes a mobile telephone terminal which can operate in an i-mode. The customer's player 6a can be connected with the relay station 10A on an i-mode basis.

In the case where the customer's player 6a is connected with the relay station 10A on the i-mode basis, the customer's player 6a can transmit a signal of an order for desired contents to the management center MC via the relay station 10A and the web server 9. As a reply to the order, the customer's player 6a can receive desired contents data via the web server 9 and the relay station 10A.

Communications among the web server 9, the relay station 10A, and the customer's player 6a are basically similar to those among the web server 9, the PC client 10, and the customer's player 6a (see Figs. 14, 15, 16, 17, 18, and 19). Before communications are started, the customer's player 6a is connected with the relay station 10A on the i-mode basis. During communications, the customer's player 6a remains connected with the relay station 10A on the i-mode basis. After communications have been completed, the i-mode coupling between the customer's player 6a and the relay station 10A is disconnected.

## Claims

1. A sale destination terminal apparatus for a contents sale system including a host apparatus for feeding contents data, the terminal apparatus comprising:
means for storing a signal representing an electronic purse having electronic money;
means for, in cases where contents data are copied and transferred from the present terminal apparatus to a copy destination apparatus, storing a signal representing a transfer generation number corresponding to a number of times of transfer of the contents data;
means for, in cases where copied contents data are transferred to the present terminal apparatus from a copy source apparatus, storing a signal representing a history of transfer of at least one of a copy source ID and sale contents;
means for, in cases where the copied contents data are transferred to the present terminal apparatus, receiving the copied contents data;
means for reducing the electronic money in the electronic purse by an amount corresponding to the received contents data;
means for, when the present terminal apparatus is connected with the host apparatus, transmitting the signal representing the transfer history to the host apparatus in response to a requirement signal fed from the host apparatus; and
means for deleting the stored signal of the transfer history in response to a control signal fed from the host apparatus.

2. A sale destination terminal apparatus for a contents sale system including a host apparatus for feeding contents data, the terminal apparatus comprising:
means for storing a signal representing an electronic purse having electronic money;
means for, in cases where copied contents data are transferred to the present terminal apparatus from a copy source apparatus, storing a signal representing a history of transfer of the contents data;
means for transmitting the signal of the transfer history to the copy source apparatus and thereafter receiving the copied contents data;
means for reducing the electronic money in the electronic purse by an amount corresponding to the received contents data;
means for, when the present terminal apparatus is connected with the host apparatus, transmitting the signal representing the transfer history to the host apparatus in response to a requirement signal fed from the host apparatus; and
means for deleting the stored signal of the transfer history in response to a control signal fed from the host apparatus.

3. A sale destination terminal apparatus for a contents sale system including a host apparatus for feeding contents data, the terminal apparatus comprising:
means for, in cases where contents data are copied and transferred from the present terminal apparatus to a copy destination apparatus and in cases where contents data are copied and transferred to the present terminal apparatus from a copy source apparatus, storing a signal representing a transfer history;
means for transmitting the signal of the transfer history to the host apparatus;
means for receiving a control signal from the host apparatus after the signal of the transfer history is transmitted to the host apparatus; and
means for deleting the stored signal of the transfer history in response to the control signal from the host apparatus.

4. A sale destination terminal apparatus as recited in claim 1, 2 or 3, further comprising means for transmitting information of the transfer history to a settlement box, means for receiving a control signal from the settlement box as a response to the information of the transfer history, and means for deleting the stored signal of the transfer history in response to the control signal from the settlement box.

5. A sale destination terminal apparatus as recited in claim 3 or 4, further comprising means for storing a signal of a transfer generation number corresponding to a number of times of copying the contents data in a transferred signal header each time the contents data are copied and transferred, means for receiving first contents information from the copy destination terminal, means for storing second contents information, and means for deciding whether copying is permitted or prohibited on the basis of the first contents information and the second contents information.

6. A host apparatus for a contents sale system including a sale destination terminal apparatus for receiving contents data, the host apparatus comprising:
means for receiving a signal of a transfer history from the sale destination terminal apparatus; and
means for, after the signal of the transfer history is received, transmitting a control signal to the sale destination terminal, the control signal being designed to delete the signal of the transfer history from the sale destination terminal apparatus.

7. A settlement box for a contents sale system including a sale destination terminal apparatus for receiving contents data, the settlement box comprising:
means for receiving a signal of a transfer history from the sale destination terminal apparatus; and
means for, after the signal of the transfer history is received, transmitting a control signal to the sale destination terminal, the control signal being designed to delete the signal of the transfer history from the sale destination terminal apparatus.

8. A sale destination terminal apparatus for a contents sale system including a host apparatus for feeding contents data, the terminal apparatus comprising:
means for storing contents data fed from the host apparatus;
means for transmitting editing information to the host apparatus in response to a requirement signal fed from the host apparatus, the editing information representing at least one of a playback order, a data length, a title name, and an artist name related to the contents data;
means for receiving editing-resultant information from the host apparatus as a response to the editing information; and
means for editing the stored contents data in response to the editing-resultant information.

9. A host apparatus for a contents sale system including a sale destination terminal apparatus for receiving contents data, the host apparatus comprising:
means for receiving editing information from the sale destination terminal apparatus;
means for executing an editing process on the basis of the editing information to generate editing-resultant information; and
means for transmitting the editing-resultant information to the sale destination terminal apparatus.

10. A method of managing copying in a contents sale system, comprising the steps of:
generating first encryption-resultant authentication data in response to first predetermined common key data in a copy destination apparatus;
transmitting the first encryption-resultant authentication data from the copy destination apparatus to a copy source apparatus;
decrypting the first encryption-resultant authentication data into first decryption-resultant authentication data in response to the first predetermined common key in the copy source apparatus;
authenticating the copy destination apparatus in response to the first decryption-resultant authentication data in the copy source apparatus;
generating second encryption-resultant authentication data in response to second predetermined common key data in the copy source apparatus;
transmitting the second encryption-resultant authentication data from the copy source apparatus to the copy destination apparatus;
decrypting the second encryption-resultant authentication data into second decryption-resultant authentication data in response to the second predetermined common key in the copy destination apparatus;
authenticating the copy source apparatus in response to the second decryption-resultant authentication data in the copy destination apparatus; and
deciding whether copying is permitted or prohibited after the copy destination apparatus and the copy source apparatus are authenticated.

11. A method of managing copying in a contents sale system, comprising the steps of:
generating first authentication data in a copy destination apparatus;
transmitting the first authentication data from the copy destination apparatus to a copy source apparatus;
authenticating the copy destination apparatus in response to the first authentication data in the copy source apparatus;
generating second authentication data in the copy source apparatus;
transmitting the second authentication data from the copy source apparatus to the copy destination apparatus;
authenticating the copy source apparatus in response to the second authentication data in the copy destination apparatus; and
deciding whether copying is permitted or prohibited after the copy destination apparatus and the copy source apparatus are authenticated.

12. A method of managing copying in a contents sale system, comprising the steps of:
generating first forward authentication data in a copy source apparatus;
transmitting the first forward authentication data from the copy source apparatus to a copy destination apparatus;
generating first reply authentication data in response to the first forward authentication data in the copy destination apparatus;
transmitting the first reply authentication data from the copy destination apparatus to the copy source apparatus;
authenticating the copy destination apparatus in response to the first reply authentication data in the copy source apparatus;
generating second forward authentication data in the copy destination apparatus;
transmitting the second forward authentication data from the copy destination apparatus to the copy source apparatus;
generating second reply authentication data in response to the second forward authentication data in the copy source apparatus;
transmitting the second reply authentication data from the copy source apparatus to the copy destination apparatus;
authenticating the copy source apparatus in response to the second reply authentication data in the copy destination apparatus; and
deciding whether copying is permitted or prohibited after the copy destination apparatus and the copy source apparatus are authenticated.

13. A method as recited in claim 12, wherein the copy source apparatus comprises one of a terminal apparatus in a store, a settlement box, a server for an Internet service, a personal computer for a user, and a player.

14. A player executing at least portions of the steps in any one of the methods in claim 10 to 13.

15. A method of transmitting data, comprising the steps of:
encrypting first data into first encryption-resultant data in response to first predetermined playback key data;
encrypting second data into second encryption-resultant data in response to second predetermined playback key data; and
transmitting the first encryption-resultant data and the second encryption-resultant data;
wherein the second predetermined playback key data providing a decoding rate different from a decoding rate provided by the first predetermined playback key data.

16. A method of transmitting data, comprising the steps of:
executing Exclusive-OR operation between actual contents data and first playback key data to encrypt the actual contents data into first encryption-resultant data;
encrypting header data into second encryption-resultant data in response to second playback key data according to DES; and
transmitting a set of the first encryption-resultant data and the second encryption-resultant data.

17. A recording medium having a predetermined area loaded with data transmitted by the method of one of claims 16 and 17.

18. A method comprising the steps of:
transmitting forward player authentication data from a store terminal apparatus to a player;
generating reply player authentication data in response to the forward player authentication data in the player;
transmitting the reply player authentication data and forward host authentication data from the player to the store terminal apparatus;
authenticating the player in response to the reply player authentication data in the store terminal apparatus;
generating reply host authentication data in response to the forward host authentication data in the store terminal apparatus;
transmitting the reply host authentication data from the store terminal apparatus to the player;
authenticating the store terminal apparatus in response to the replay host authentication data in the player; and
permitting a sale action after the player and the store terminal apparatus are authenticated.

19. A method comprising the steps of:
transmitting forward player authentication data from a PC client to a player;
generating reply player authentication data in response to the forward player authentication data in the player;
transmitting the reply player authentication data and forward host authentication data from the player to the PC client;
authenticating the player in response to the reply player authentication data in the PC client;
generating reply host authentication data in response to the forward host authentication data in the PC client;
transmitting the reply host authentication data from the PC client to the player;
authenticating the PC client in response to the replay host authentication data in the player; and
permitting a sale action after the player and the PC client are authenticated.

20. A method comprising the steps of:
transmitting a signal of a transfer history transmission request from a store terminal apparatus to a player;
transmitting a signal of a transfer history from the player to the store terminal apparatus in response to the signal of the transfer history transmission request;
transmitting a signal of a transfer history deletion request from the store terminal apparatus to the player;
transmitting a signal of a transfer history deletion notice from the player to the store terminal apparatus in response to the signal of the transfer history deletion request; and
permitting a sale action after the signal of the transfer history deletion notice is transmitted.

21. A method comprising the steps of:
transmitting a signal of a transfer history transmission request from a web server to a player via a PC client;
transmitting a signal of a transfer history from the player to the web server via the PC client in response to the signal of the transfer history transmission request;
transmitting a signal of a transfer history deletion request from the web server to the player via the PC client;
transmitting a signal of a transfer history deletion notice from the player to the web server via the PC client in response to the signal of the transfer history deletion request; and
permitting a sale action after the signal of the transfer history deletion notice is transmitted.

22. A method comprising the steps of:
generating original playback key data;
encrypting original contents data into encryption-resultant contents data in response to the original playback key data;
encrypting the original playback key data into first encryption-resultant playback key data;
transmitting the encryption-resultant contents data and the first encryption-resultant playback key data from an authoring system unit to a sale source terminal apparatus;
causing the sale source terminal apparatus to encrypt the first encryption-resultant playback key data into second encryption-resultant playback key data in response to data peculiar to a sale destination terminal apparatus; and
permitting a sale action using the second encryption-resultant playback key data.

23. A method comprising the steps of:
generating original playback key data;
encrypting original contents data into encryption-resultant contents data in response to the original playback key data;
encrypting the original playback key data into first encryption-resultant playback key data;
transmitting the encryption-resultant contents data and the first encryption-resultant playback key data from an authoring system unit to a sale source terminal apparatus;
causing the sale source terminal apparatus to encrypt the first encryption-resultant playback key data into second encryption-resultant playback key data in response to data peculiar to a sale destination terminal apparatus; and
permitting a sale action using the second encryption-resultant playback key data;
wherein the sale source terminal apparatus comprises a web server, and the sale destination terminal apparatus comprises a player connected with the web server via a PC client.

24. A method using a sale destination terminal apparatus, the sale destination terminal apparatus including a mobile telephone terminal device, the method comprising the step of receiving data from a sale source terminal apparatus according to claim 7 via mobile telephone contents-information transmission service.

25. A system comprising a sale destination terminal apparatus, the sale destination terminal apparatus including a mobile telephone terminal device which receives data from a sale source terminal apparatus according to claim 7 via a mobile telephone contents-information transmission service.
